# EUROPEAN PATENT APPLICATION

(11) **EP 4 683 103 A1**
(43) Date of publication of application: **21.01.2026**
(21) Application number: 24884430.0
(22) Date of filing: 16.10.2024
(51) Int. Cl.: H01M 50/543, H01M 50/531

(54) **BATTERY CELL AND PREPARATION METHOD THEREFOR, BATTERY, ELECTRIC DEVICE, AND ENERGY STORAGE DEVICE**

(30) Priority: 31.10.2023 CN 202311434115
(71) Applicant: Contemporary Amperex Technology Co., Limited, Ningde, Fujian 352100 (CN)
(72) Inventor: WU, Yu, Ningde, Fujian 352100 (CN); CHEN, Xinxiang, Ningde, Fujian 352100 (CN); CAI, Xianghu, Ningde, Fujian 352100 (CN); JIANG, Xiangwei, Ningde, Fujian 352100 (CN); ZHENG, Yulian, Ningde, Fujian 352100 (CN); WANG, Peng, Ningde, Fujian 352100 (CN)
(74) Representative: Kraus & Lederer PartGmbB
(86) International application number: PCT/CN2024/125256
(87) International publication number: WO 2025/092426

(57) **Abstract**

Embodiments of this application provide a battery cell and a preparation method thereof, a battery, an electric apparatus, and an energy storage apparatus, improving the internal insulation performance of the battery cell. The battery cell includes: a housing; an electrode assembly, where the electrode assembly is accommodated in the housing; an electrode terminal, where the electrode terminal is disposed on the housing; and a connecting member, where the connecting member is configured to connect the electrode terminal and the electrode assembly and a first insulating portion is disposed on at least a portion of a surface of the connecting member facing the housing.

## Description

### CROSS-REFERENCE TO RELATED APPLICATIONS

This application claims priority to Chinese Patent Application No. 202311434115.7, filed on October 31, 2023 and entitled "BATTERY CELL AND PREPARATION METHOD THEREOF, BATTERY, ELECTRIC APPARATUS, AND ENERGY STORAGE APPARATUS", which is incorporated herein by reference in its entirety.

### TECHNICAL FIELD

Embodiments of this application relate to the field of battery technology, and more specifically, to a battery cell and preparation method thereof, a battery, an electric apparatus, and an energy storage apparatus.

### BACKGROUND

Energy conservation and emission reduction are key to the sustainable development of the automotive industry. In this context, electric vehicles, due to their advantages in energy conservation and environmental protection, have become an important component of the sustainable development of the automotive industry. For electric vehicles, battery technology is a critical factor in their development.

In battery cells, an insulating structure is often required to reduce the possibility of internal short circuits. The internal insulation performance of a battery cell is an important factor in assessing the reliability of a battery. Therefore, improving the internal insulation performance of a battery cell remains a problem to be solved.

### SUMMARY

Embodiments of this application provide a battery cell and preparation method thereof, a battery, an electric apparatus, and an energy storage apparatus, improving the internal insulation performance of the battery cell.

According to a first aspect, a battery cell is provided, including: a housing; an electrode assembly, where the electrode assembly is accommodated in the housing; an electrode terminal, where the electrode terminal is disposed on the housing; and a connecting member, where the connecting member is configured to connect the electrode terminal and the electrode assembly, and a first insulating portion is disposed on at least a portion of a surface of the connecting member facing the housing.

In this embodiment of this application, the first insulating portion can insulate the connecting member from the housing, so that the housing is less likely to be electrified through an electrical connection between the connecting member and the electrode assembly when the distance between the connecting member and the housing is small, thereby improving the reliability of the battery cell. In addition, when the connecting member and the housing are pre-assembled, it is difficult to dispose an insulating component after the pre-assembly of the connecting member and the housing. Therefore, the first insulating portion can simplify the disposition of an insulating component between the connecting member and the housing, improving the processing efficiency of the battery cell.

In some embodiments, the connecting member includes a first connecting portion, the first connecting portion is connected to the electrode assembly, the first insulating portion includes a first insulating layer, and the first insulating layer is disposed on a surface of the first connecting portion facing away from the electrode assembly.

The distance between the first connecting portion and the housing of the battery cell is small. Without the first insulating layer, the first connecting portion is prone to contact the housing, causing the housing to be electrified. Therefore, the first insulating layer can insulate the connecting member from the housing, so that the housing is less likely to be electrified, thereby improving the reliability of the battery cell.

In some embodiments, a second insulating portion is disposed on at least a portion of a surface of the first connecting portion facing the electrode assembly.

The second insulating portion can provide insulation for the connecting member on a side of the first insulating portion facing the electrode assembly, enhancing the insulation performance of the first connecting portion of the connecting member.

In some embodiments, the second insulating portion is disposed at an edge of the surface of the first connecting portion facing the electrode assembly, and a portion of the surface of the first connecting portion facing the electrode assembly is connected to a tab of the electrode assembly, where the portion of the surface is not provided with the second insulating portion.

This can provide insulation protection for the edge region of the first connecting portion, so that the housing body is less likely to be electrified due to contact with the edge region of the first connecting portion.

In some embodiments, the first connecting portion has a first surface, where the first surface connects the surface of the first connecting portion facing the electrode assembly and the surface of the first connecting portion facing away from the electrode assembly; and the first insulating portion includes a second insulating layer, where the second insulating layer is disposed on at least a portion of the first surface.

The second insulating layer disposed on the first surface allows the surface of the first connecting portion facing the housing of the battery cell to be covered with as much insulating structure as possible, thereby enhancing the insulation performance of the first connecting portion and improving the reliability of the battery cell.

In some embodiments, the second insulating layer is connected to at least one of the first insulating layer and the second insulating portion.

This not only enhances the insulation performance at the corners of the first connecting portion but also increases the adhesion of the first insulating layer, the second insulating layer, and the second insulating portion on the surface of the first connecting portion, improving the insulation performance of the corresponding portions of the first connecting portion, thereby enhancing the reliability of the battery cell. When the second insulating layer is connected to both the first insulating layer and the second insulating portion, the creepage distance between the first connecting portion and the housing body is increased, reducing the possibility of a short circuit with the first connecting portion.

In some embodiments, a surface of the housing facing a tab of the electrode assembly has a protrusion, and the second insulating layer is disposed between a sidewall of the protrusion and the first connecting portion.

The second insulating layer can reduce the possibility of electrification due to contact between the first connecting portion and the sidewall of the protrusion, enhancing the insulation performance of the battery cell and thereby improving the reliability of the battery cell.

In some embodiments, the connecting member includes a second connecting portion, the second connecting portion is bent relative to the first connecting portion, and the second connecting portion is connected to the electrode terminal.

The second connecting portion allows for more flexible positioning of the electrode terminal, thereby enabling structures within the battery cell to be arranged more flexibly.

In some embodiments, the first insulating portion includes a third insulating layer, and the third insulating layer is disposed on at least a portion of a surface of the second connecting portion facing away from the electrode assembly.

The third insulating layer can insulate the second connecting portion from the housing body of the battery cell so that the second connecting portion is less likely to conduct electricity to the housing body of the battery cell, thereby enhancing the insulation performance of the battery cell.

In some embodiments, the housing includes an end cap and a housing body, where the end cap covers an opening of the housing body; and the battery cell includes: an insulating member, where at least a portion of the insulating member is disposed between the housing body and the connecting member, and at least a portion of the third insulating layer is disposed between the second connecting portion and the insulating member.

The third insulating layer can further insulate the connecting member from the insulating member, enhancing the effects of insulation between the second connecting portion and the housing and thereby improving the reliability of the battery cell.

In some embodiments, the insulating member includes a first groove, and at least a portion of the third insulating layer is accommodated in the first groove.

The third insulating layer can insulate the connecting member from the housing while increasing the creepage distance between the housing and the connecting member, so that the connecting member and the housing are less likely to be conducted due to electrification of the insulating member, thereby improving the reliability of the battery cell. Additionally, the first groove can reduce the space occupied by the third insulating layer, increasing energy density.

In some embodiments, the second connecting portion has a second surface, where the second surface connects a surface of the second connecting portion facing the electrode assembly and the surface of the second connecting portion facing away from the electrode assembly; and the first insulating portion includes a fourth insulating layer, where the fourth insulating layer covers at least a portion of the second surface.

The fourth insulating layer allows the surface of the second connecting portion to be covered with as much insulating structure as possible, thereby enhancing the insulation performance of the second connecting portion and improving the reliability of the battery cell.

In some embodiments, a third insulating portion is disposed on at least a portion of the surface of the second connecting portion facing the electrode assembly.

The third insulating portion can provide insulation for the second connecting portion on a side of the second connecting portion facing the electrode assembly, reducing the possibility of electrical conduction due to contact between the surface of the electrode assembly facing the second connecting portion and the second connecting portion.

In some embodiments, the fourth insulating layer is connected to at least one of the third insulating layer and the third insulating portion.

This not only enhances the insulation performance at the corners between different surfaces of the second connecting portion but also increases the adhesion of the third insulating layer, the fourth insulating layer, and the third insulating portion on the surface of the second connecting portion, improving the insulation performance of the corresponding portions of the second connecting portion and thereby enhancing the reliability of the battery cell. When the fourth insulating layer is connected to both the third insulating layer and the third insulating portion, the creepage distance between the second connecting portion and the housing body is increased, reducing the possibility of conduction between the second connecting portion and the housing body.

In some embodiments, the connecting member includes the first connecting portion, the second connecting portion, and a third connecting portion, where the first connecting portion is connected to the electrode assembly, the second connecting portion is connected to the electrode terminal, and the third connecting portion is bent and connects the first connecting portion and the second connecting portion.

The third connecting portion can connect the first connecting portion and the second connecting portion extending in different directions, enabling electrical connection between the electrode assembly and the battery cell located in two intersecting planes, thereby increasing the flexibility of the internal structural arrangement of the battery cell.

In some embodiments, the first insulating portion includes a fifth insulating layer, and the fifth insulating layer is disposed on at least a portion of a surface of the third connecting portion facing away from the electrode assembly.

The fifth insulating layer can provide insulation for the connecting member on a side of the third connecting portion facing the housing, insulating the third connecting portion from the housing body. In this way, the housing is less likely to be electrified.

In some embodiments, the third connecting portion has a third surface, where the third surface connects a surface of the third connecting portion facing the electrode assembly and the surface of the third connecting portion facing away from the electrode assembly; and the first insulating portion includes a sixth insulating layer, where the sixth insulating layer is disposed on at least a portion of the third surface.

The sixth insulating layer allows the surface of the third connecting portion facing the housing of the battery cell to be covered with as much insulating structure as possible, thereby enhancing the insulation performance of the third connecting portion and improving the reliability of the battery cell.

In some embodiments, a fourth insulating portion is disposed on at least a portion of the surface of the third connecting portion facing the electrode assembly.

The fourth insulating portion can provide insulation for the surface of the third connecting portion facing the electrode assembly, reducing the possibility of electrical connection between the electrode assembly and the third connecting portion.

In some embodiments, the sixth insulating layer is connected to at least one of the fifth insulating layer and the fourth insulating portion.

This not only enhances the insulation performance at the corners between different surfaces of the third connecting portion but also increases the adhesion of the fifth insulating layer, the sixth insulating layer, and the fourth insulating portion on the surface of the third connecting portion, improving the insulation performance of the corresponding portions of the third connecting portion and thereby enhancing the reliability of the battery cell.

In some embodiments, the second insulating portion is disposed on at least a portion of a surface of the first connecting portion facing the electrode assembly, a third insulating portion is disposed on at least a portion of a surface of the second connecting portion facing the electrode assembly, a fourth insulating portion is disposed on at least a portion of a surface of the third connecting portion facing the electrode assembly, where the first insulating portion, the second insulating portion, the third insulating portion, and the fourth insulating portion are integrally formed.

On one hand, this can enhance the adhesion of the first insulating portion, the second insulating portion, the third insulating portion, and the fourth insulating portion on the connecting member, reducing connection gaps between insulating components in different regions of the connecting member and improving the connection strength between insulating components in different regions of the connecting member. On the other hand, the first insulating portion, the second insulating portion, the third insulating portion, and the fourth insulating portion can be integrally formed using methods such as injection molding, improving assembly efficiency.

In some embodiments, the housing includes an end cap and a housing body, the end cap covers the opening of the housing body, and the electrode terminal is disposed on the housing body.

Disposing the electrode terminal on the housing body facilitates the integration of the electrode terminal with the housing body, so that the electrode terminal can be disposed on the housing body more reliably.

In some embodiments, the housing body includes a first wall and a second wall that are adjacent, the electrode terminal is disposed on the first wall, and a side of the electrode assembly facing the second wall is provided with the tab.

This structure allows for more flexible positioning of the electrode terminal and the tab, enabling the electrode terminal and the tab to be arranged according to different requirements. Additionally, the connecting member in a bent shape facilitates electrical connection between the electrode terminals in different positions and the tab, making the internal structural arrangement of the battery cell more flexible.

In some embodiments, the end cap is connected to the first wall and the second wall, a projected area of the end cap in a direction perpendicular to a thickness direction of the end cap is larger than a projected area of the first wall in a direction perpendicular to a thickness direction of the first wall, and the projected area of the end cap in the direction perpendicular to the thickness direction of the end cap is larger than a projected area of the second wall in a direction perpendicular to a thickness direction of the second wall.

When the area of the end cap is large, the connecting member is connected to the electrode terminal at a portion corresponding to the first wall and connected to the electrode assembly at a portion corresponding to the second wall, resulting in fewer portions of the connecting member that may contact the end cap. In this way, the connecting member can be insulated from the end cap by using less insulating structure.

In some embodiments, a melting point of the first insulating portion is greater than or equal to 100°C.

This can effectively reduce the impact of the welding of the connecting member and the electrode assembly on the first insulating portion, thereby properly insulating the first insulating portion from the first connecting portion and improving the reliability of the battery cell.

According to a second aspect, a battery is provided, including the battery cell according to any one of the foregoing embodiments.

According to a third aspect, an electric apparatus is provided, including the battery cell according to any one of the foregoing embodiments or the battery according to any one of the foregoing embodiments, where the battery cell or the battery is configured to supply electric energy to the electric apparatus.

According to a fourth aspect, an energy storage apparatus is provided, including the battery cell according to any one of the foregoing embodiments or the battery according to any one of the foregoing embodiments.

According to a fifth aspect, a method for preparing a battery cell is provided, including: disposing a first insulating portion on a surface of a connecting member; connecting one end of the connecting member to an electrode terminal disposed on a housing while placing the first insulating portion between the housing and the connecting member; and connecting another end of the connecting member to an electrode assembly.

The first insulating portion is disposed on the surface of the connecting member before the connecting member is connected to the electrode terminal and the electrode assembly. The method for preparing a battery cell provided by the embodiment of this application allows the first insulating portion to be disposed between the connecting member and the housing easily, while the first insulating portion can properly insulate the connecting member from the housing, thereby improving the reliability of the battery cell.

In some embodiments, the connecting member includes a first connecting portion, a second connecting portion, and a third connecting portion, where the first connecting portion is connected to the electrode assembly, the second connecting portion is connected to the electrode terminal, and the third connecting portion connects the first connecting portion and the second connecting portion.

The third connecting portion allows for electrical connection between the electrode assembly and the battery cell located in two intersecting planes, thereby increasing the flexibility of the internal structural arrangement of the battery cell.

In some embodiments, the method includes: integrally forming the first insulating portion, a second insulating portion, a third insulating portion, and a fourth insulating portion on the surface of the connecting member, while placing the second insulating portion between the electrode assembly and the first connecting portion, the third insulating portion between the electrode assembly and the second connecting portion, and the fourth insulating portion between the electrode assembly and the third connecting portion.

This can insulate the surface of the connecting member facing the electrode assembly from the electrode assembly when the connecting member is in an assembled state, improving the insulation performance of the battery cell.

In some embodiments, the housing includes an end cap and a housing body, where the method includes: using the end cap to cover an opening of the housing body, when one end of the connecting member is connected to the electrode terminal disposed on the housing with the first insulating portion placed between the housing and the connecting member, and another end of the connecting member is connected to the electrode assembly.

The electrode assembly can be placed into an accommodating space within the housing body through the opening of the housing body, and the end cap covers the opening of the housing body. Specifically, the connection between the end cap and the housing body can be sealed by welding or other methods to make the housing formed by the end cap and the housing body as sealed as possible, which helps improve the reliability of the battery cell.

In some embodiments, the housing body includes a sidewall and a bottom wall, where the bottom wall is opposite the opening, and the connecting one end of the connecting member to an electrode terminal disposed on a housing while placing the first insulating portion between the housing and the connecting member includes: connecting one end of the connecting member to the electrode terminal disposed on the housing while placing the first insulating portion between the sidewall and the connecting member.

This allows the first insulating portion to provide good insulation performance within the battery cell, thereby improving the reliability of the battery cell.

### BRIEF DESCRIPTION OF DRAWINGS

To more clearly illustrate the technical solutions of the embodiments of this application, the drawings required for use in the embodiments of this application are briefly described below. It is apparent that the drawings described below are only some embodiments of this application, and those of ordinary skill in the art can obtain other drawings based on these drawings without creative effort.
FIG. 1 is a schematic structural diagram of a vehicle according to an embodiment of this application.
FIG. 2 is a schematic structural diagram of a battery according to an embodiment of this application.
FIG. 3 is a schematic structural diagram of a battery cell according to an embodiment of this application.
FIG. 4 is a schematic cross-sectional structural diagram of the battery cell in FIG. 3 along the A-A direction.
FIG. 5 is a schematic diagram of an enlarged structure of portion T in FIG. 4.
FIG. 6 is a schematic structural diagram of a connecting member according to an embodiment of this application.
FIG. 7 is a schematic cross-sectional structural diagram of the structure in FIG. 6 along the B-B direction.
FIG. 8 is a schematic structural diagram of the structure in FIG. 6 from another perspective.
FIG. 9 is a schematic structural diagram of another connecting member according to an embodiment of this application.
FIG. 10 is a schematic diagram of an enlarged structure of portion D in FIG. 5 and a schematic structural diagram of portion D without the second insulating layer.
FIG. 11 is a schematic cross-sectional structural diagram of the structure in FIG. 8 along the C-C direction.
FIG. 12 is a schematic cross-sectional structural diagram of the structure in FIG. 9 along the F-F direction.
FIG. 13 is a schematic diagram of an enlarged structure of portion G in FIG. 5.
FIG. 14 is a schematic diagram of an enlarged structure of portion E in FIG. 7.
FIG. 15 shows a method for preparing a battery cell according to an embodiment of this application.

The accompanying drawings are not drawn to actual scale.

### DESCRIPTION OF EMBODIMENTS

The following further describes the embodiments of this application in detail with reference to the accompanying drawings and implementations. The following detailed description of embodiments and the accompanying drawings are intended to illustrate the principle of this application rather than to limit the scope of this application, meaning that this application is not limited to the embodiments as described.

In the descriptions of this application, it should be noted that, the orientations or positional relationships indicated by the orientation terms "upper", "lower", "left", "right", "inside", "outside", and the like are merely intended for ease and brevity of the description of this application rather than indicating or implying that the apparatuses or components mentioned must have specific orientations, or must be constructed or manipulated according to specific orientations, and therefore shall not be construed as any limitations on embodiments of this application. In addition, the terms "first", "second", "third", and the like are merely intended for a purpose of description, and shall not be understood as an indication or implication of relative importance. "Perpendicular" means being perpendicular with an allowable range of error other than being strictly perpendicular. "Parallel" means being vertical with an allowable range of error other than being strictly parallel. All technical and scientific terms used herein shall have the same meanings as commonly understood by those skilled in the art to which this application belongs. The terms used herein are intended to merely describe the specific embodiments rather than to limit this application. The terms "include" and "have" and any other variations thereof in the specification, claims and brief description of drawings of this application are intended to cover non-exclusive inclusions.

The orientation terms appearing in the following description all refer to the orientations as shown in the drawings, and do not limit the specific structure of this application. In the description of this application, it should also be noted that, unless otherwise expressly specified and limited, the terms "mount", "connect", and "join" should be understood in a broad sense, for example, it may be a fixed connection, a detachable connection, or an integral connection; it may be a direct connection or an indirect connection through an intermediate medium. For those of ordinary skill in the art, the specific meanings of the foregoing terms in this application can be understood according to specific circumstances.

In this specification, reference to an "embodiment" means that specific features, structures or characteristics described with reference to the embodiment may be incorporated in at least one embodiment of this application. The word "embodiment" appearing in various places in the specification does not necessarily refer to the same embodiment, or an independent or alternative embodiment that is exclusive of other embodiments. Those skilled in the art explicitly and implicitly understand that the embodiments described in this application can be combined with other embodiments.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

The term "a plurality of" in this application means more than two (inclusive). Similarly, "a plurality of groups" means more than two (inclusive) groups, and "a plurality of pieces" means more than two (inclusive) pieces.

In the embodiments of this application, the same reference signs denote the same components. For brevity, in different embodiments, detailed descriptions of the same components are omitted. It should be understood that the thickness, length, width and other dimensions of various components in the embodiments of the application shown in the drawings, as well as the overall thickness, length and width of the integrated apparatus, are for illustrative purposes only, and should not constitute any limitation to this application.

In this application, the battery cell may include a lithium-ion secondary battery, a lithium-ion primary battery, a lithium-sulfur battery, a sodium-lithium-ion battery, a sodium-ion battery, a lithium metal batter, a magnesium-ion battery, or the like, which is not limited in this embodiment of this application. The battery cell may be cylindrical, flat, cuboid, or of other shapes, which is not limited in this embodiment of this application either. The battery cells are typically divided into three types by packaging method: cylindrical battery cell, prismatic battery cell, and pouch battery cell. This is not limited in this embodiment of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent a liquid or another foreign matter from affecting charging or discharging of the battery cell.

The battery cell includes an electrode assembly and an electrolyte. The electrode assembly includes a positive electrode plate, a negative electrode plate and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. A positive electrode current collector uncoated with the positive electrode active substance layer bulges out of a positive electrode current collector coated with the positive electrode active substance layer, and the positive electrode current collector uncoated with the positive electrode active substance layer is used as a positive tab. A lithium-ion battery is used as an example, for which the positive electrode current collector may be made of aluminum and a positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A negative electrode current collector uncoated with the negative electrode active substance layer bulges out of a negative electrode current collector coated with the negative electrode active substance layer, and the negative electrode current collector uncoated with the negative electrode active substance layer is used as a negative tab. The negative electrode current collector may be made of copper, and the negative electrode active substance may be carbon, silicon, lithium metal, lithium alloy, or the like. To allow a large current to pass through without any fusing, a plurality of positive tabs are provided and stacked together, and a plurality of negative tabs are provided and stacked together. The separator may be made of polypropylene (polypropylene, PP), polyethylene (polyethylene, PE), or the like. In addition, the electrode assembly in the embodiments of this application may include but is not limited to a wound structure or a laminated structure.

An insulating region is typically provided in a battery cell, especially in areas with electrical connections inside the battery cell. In this regard, an insulating region needs to be provided to reduce the possibility of short circuits within the battery cell or electrification of the housing. For example, the connecting member implements electrical connection between the tab of the electrode assembly and the electrode terminal, and the portion of the connecting member in contact with the housing of the battery cell requires insulating tape for insulation between the connecting member and the housing. This makes the battery cell housing less likely to be electrified.

However, with the development of battery cell manufacturing processes, the preparation of battery cells develops toward high integration. In one battery cell manufacturing process, the connecting member of the battery cell is pre-connected to the housing of the battery cell. In subsequent assembly processes, space between the connecting member and the housing is insufficient for attaching insulating tape to the connecting member. In this case, the connecting member tends to conduct electricity generated by the electrode assembly to the housing, causing the housing of the battery cell to be electrified and affecting the reliability of the battery cell.

In view of this, an embodiment of this application provides a battery cell, where a first insulating portion is disposed on at least a portion of a surface of the connecting member facing the housing. Even if the connecting member is pre-connected to the housing of the battery cell, the first insulating portion can insulate the connecting member from the housing when the battery cell is assembled. In this way, the housing is less likely to be electrified, thereby improving the reliability of the battery cell.

The technical solution described in the embodiments of this application is applicable to various electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric vehicle toy, an electric ship toy, an electric airplane toy, and the like. The electric tool includes an electric metal cutting tool, an electric grinding tool, an electric assembly tool, an electric railway-specific tool, for example, an electric drill, an electric grinder, an electric wrench, an electric screwdriver, an electric hammer, an electric impact drill, a concrete vibrator, and an electric planer. The embodiments of this application are not limited to the foregoing electric devices.

For ease of description, an example in which the electric device is a vehicle is used for description in the following embodiments.

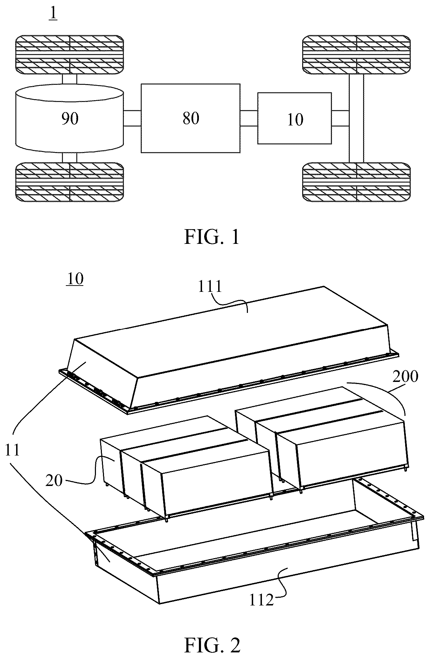

For example, as shown in FIG. 1 which is a schematic structural diagram of a vehicle 1 according to an embodiment of this application, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 90, a controller 80, and a battery 10 may be disposed inside the vehicle 1, and the controller 80 is configured to control the battery 10 to supply power to the motor 90. For example, a battery 10 may be disposed at the bottom, the front, or the rear of the vehicle 1. The battery 10 may be configured to supply power to the vehicle 1. For example, the battery 10 may be used as an operational power supply for the vehicle 1, and may be applied to a circuit system of the vehicle 1, for example, may be configured to supply power to meet the start, navigation, and driving requirements of the vehicle 1. In another embodiment of this application, the battery 10 can be used not only as the operational power supply for the vehicle 1, but also a driving power supply for the vehicle 1, to totally or partially replace the fossil fuel or the natural gas to provide driving power for the vehicle 1.

To meet different power usage requirements, a battery may include a plurality of battery cells, where the plurality of battery cells may be connected in series, parallel, or series-parallel, and being connected in series and parallel refers to a combination of series and parallel connections. The battery may also be referred to as a battery pack. Optionally, a plurality of battery cells may be connected in series, parallel, or series-parallel to form a battery module first, and then a plurality of battery modules are connected in series, parallel, or series-parallel to form a battery. In other words, the plurality of battery cells may directly form a battery, or form battery modules and then the battery modules form a battery.

For example, as shown in FIG. 2 which is a schematic structural diagram of a battery 10 according to an embodiment of this application, the battery 10 may include at least one battery module 200. The battery module 200 includes a plurality of battery cells 20. The battery 10 may further include a box 11. Inside the box 11 is a hollow structure. The plurality of battery cells 20 are accommodated in the box 11. FIG. 2 shows a possible implementation of the box 11 according to an embodiment of this application. As shown in FIG. 2, the box 11 may include two parts, which are referred to as a first portion 111 and a second portion 112, and the first portion 111 and the second portion 112 are snap-fitted together. Shapes of the first portion 111 and the second portion 112 may be determined based on a shape of the combination of the battery modules 200. At least one of the first portion 111 and the second portion 112 is provided with an opening. For example, as shown in FIG. 2, the first portion 111 and the second portion 112 each may be a hollow cuboid and have only one face with an opening, where an opening of the first portion 111 and an opening of the second portion 112 are opposite each other, and the first portion 111 and the second portion 112 are snap-fitted to form a box 11 having an enclosed chamber.

For another example, unlike what is shown in FIG. 2, only one of the first portion 111 and the second portion 112 may be a hollow cuboid with an opening, while the other one is plate-shaped to cover the opening. For example, the second portion 112 is a hollow cuboid with only one face being open, and the first portion 111 is plate-shaped. The first portion 111 covers the opening of the second portion 112 to form a box 11 with an enclosed chamber, and the chamber is capable of accommodating a plurality of battery cells 20. The plurality of battery cells 20 are combined in parallel, series, or series-parallel and placed in the box 11 formed by the snap-fitting of the first portion 111 and the second portion 112.

Optionally, the battery 10 may further include another structure. Details are not described herein. For example, the battery 10 may further include a busbar, where the busbar is configured to implement an electrical connection between a plurality of battery cells 20, for example, a parallel connection, a series connection, or a series-parallel connection. Specifically, the busbar may implement the electrical connection between the battery cells 20 by connecting electrode terminals of the battery cells 20. Further, the busbar may be fastened to the electrode terminal of the battery cell 20 by welding. The electric energy of the plurality of battery cells 20 may be further drawn out through a conductive structure passing through the box 11.

Based on different power demands, battery cells 20 in the battery module 200 may be provided in any quantity. The plurality of battery cells 20 may be connected in parallel, series, or series-parallel to implement a greater capacity or power. Because each battery 10 may include a large quantity of battery cells 20, for ease of installation, the battery cells 20 are arranged in groups, and each group of battery cells 20 forms a battery module 200. The quantity of battery cells 20 included in the battery module 200 is not limited, and may be set based on needs. The battery 10 may include a plurality of battery modules 200. These battery modules 200 may be connected in series, parallel, or series-parallel.

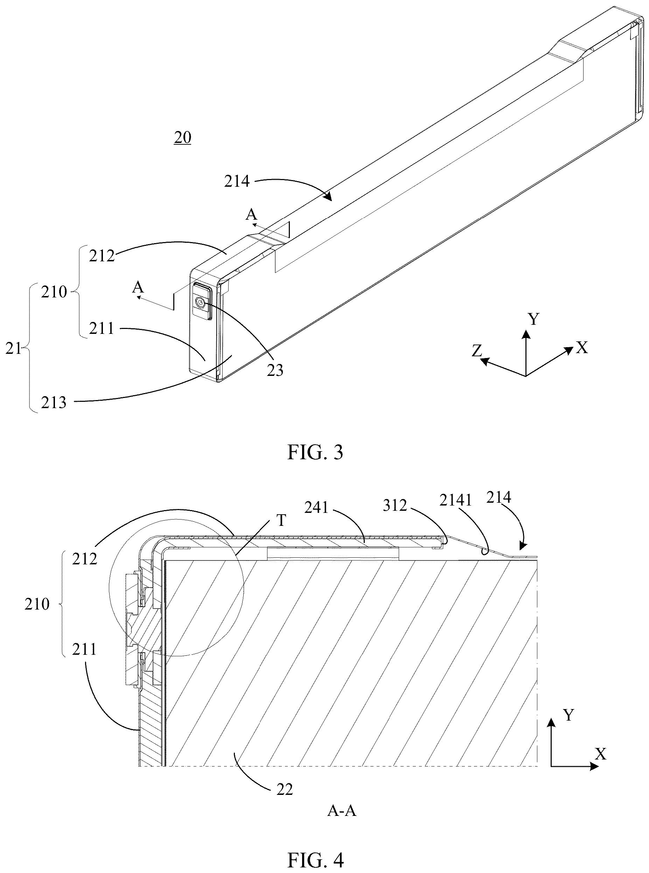

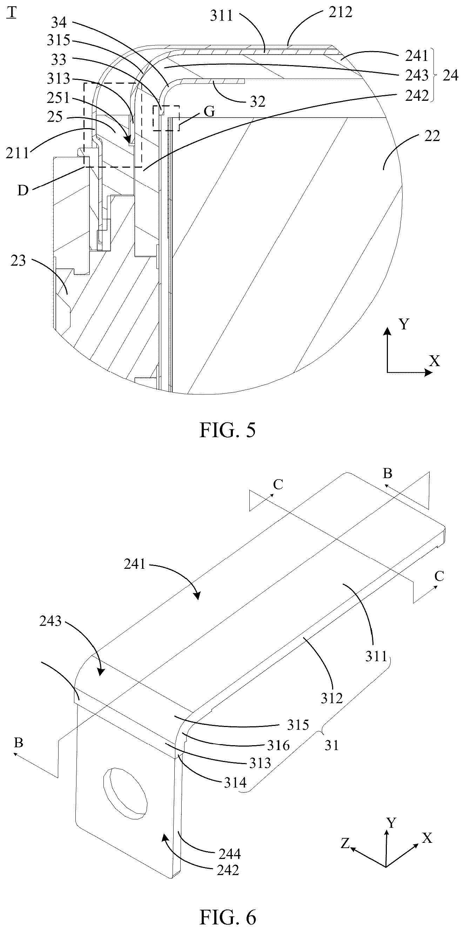

FIG. 3 shows a battery cell 20 according to an embodiment of this application, FIG. 4 is a cross-sectional view of partial structure of the battery cell 20 in FIG. 3 along the A-A direction, and FIG. 5 is a schematic diagram of an enlarged structure of portion T in FIG. 4. As shown in FIG. 3 to FIG. 5, the battery cell 20 includes a housing 21, an electrode assembly 22, an electrode terminal 23, and a connecting member 24. In an embodiment of this application, the length of the battery cell may range from 300 mm to 800 mm, and the height may range from 50 mm to 250 mm.

The electrode assembly 22 is accommodated in the housing 21, and the electrode terminal 23 is disposed on the housing 21. The connecting member 24 is configured to connect the electrode terminal 23 and the electrode assembly 22, where a first insulating portion 31 is disposed on at least a portion of a surface of the connecting member 24 facing the housing 21.

The battery cell 20 may include the housing 21 and one or more electrode assemblies 22, where the housing 21 may have multiple walls. The housing 21 of the battery cell 20 may be determined based on the shape of a combination of one or more electrode assemblies 22. For example, the housing 21 may be a cuboid, a cube, or a cylinder. The housing 21 may include a housing body 210 and an end cap 213. The housing body 210 may be a hollow structure with at least one end as an opening, and the shape of the end cap 213 may be adapted to the shape of the housing body 210. The end cap 213 is configured to cover the opening of the housing body 210 to isolate the interior of the battery cell 20 from the exterior. If the housing body 210 is a hollow structure with an opening at one end, one end cap 213 may be provided; in contrast, if the housing body 210 is a hollow structure with openings at both opposite ends, two end caps 213 may be provided, each covering the opening at one end of the housing body 210. The housing body 210 fits the end cap 213 in shape. For example, as shown in FIG. 3, the housing body 210 may be a cuboid structure, and the end cap 213 may be a rectangular plate-shaped structure that fits with the housing body 210. For ease of description, an example is used herein, in which the housing 21 is a cuboid. The end cap 213 is connected to the housing body 210 to form an enclosed chamber for accommodating the electrode assembly 22, and the housing body 210 is filled with electrolyte, for example, an electrolyte solution.

The electrode assembly 22 is a component in the battery cell 20 where electrochemical reactions occur. The electrode assembly 22 may be cylindrical, cuboidal, or the like. If the electrode assembly 22 is a cylindrical structure, the housing body 210 may also be a cylindrical structure; if the electrode assembly 22 is a cuboidal structure, the housing body 210 may also be a cuboidal structure. For any electrode assembly 22, the electrode assembly 22 may include at least two tabs, and the at least two tabs include at least one positive electrode tab and at least one negative electrode tab. The positive electrode tab may be formed by stacking a portion of the positive electrode plate not coated with a positive electrode active substance layer, and the negative electrode tab may be formed by stacking a portion of the negative electrode plate not coated with a negative electrode active substance layer.

The housing 21 may further be provided with an electrode terminal 23, and the electrode terminal 23 is electrically connected to the electrode assembly 22 to output the electric energy of the battery cell 20. The battery cell 20 may include at least two electrode terminals 23, and in some embodiments, the two electrode terminals 23 may be a positive electrode terminal and a negative electrode terminal. The at least two electrode terminals 23 may be disposed on the same wall or different walls of the battery cell 20. For example, as shown in FIG. 3, one electrode terminal 23 is disposed on only one of the walls of the housing 21. In some embodiments, another electrode terminal 23 may be disposed on a wall opposite this wall. In some embodiments, it may alternatively be disposed on a wall adjacent to this wall. In some embodiments, it may alternatively be disposed on this wall.

The connecting member 24, also referred to as a current collecting member, is disposed between the housing 21 and the electrode assembly 22, and is configured to electrically connect the electrode assembly 22 and the electrode terminal 23. The positive electrode tab of one or more electrode assemblies 22 is connected to the positive electrode terminal through one connecting member 24, and the negative electrode tab of one or more electrode assemblies 22 is connected to the negative electrode terminal through another connecting member 24. The connecting member 24 and the tab may be connected by laser welding or ultrasonic welding.

The first insulating portion 31 is disposed between the connecting member 24 and the housing 21, as shown in FIG. 4 and FIG. 5.

In some embodiments, the first insulating portion 31 is disposed on a portion of the surface of the connecting member 24 facing the housing 21. Specifically, the surface of the connecting member 24 may be divided into a connection region and a non-connection region. The connection region includes a region where the connecting member 24 is connected to the electrode terminal 23 or the electrode assembly 22, and the non-connection region includes regions other than the connection region. On the surface of the connecting member 24 facing the housing 21, the connection region of the connecting member 24 is connected to the electrode terminal 23, and the first insulating portion 31 is disposed on at least a portion of the non-connection region. For example, on the surface of the connecting member 24 facing the housing 21, the first insulating portion 31 may be disposed on a portion of the non-connection region that is closer to the housing 21. For another example, on the surface of the connecting member 24 facing the housing 21, the first insulating portion 31 may be disposed in all the non-connection regions.

In some embodiments, the first insulating portion 31 is disposed on the entire surface of the connecting member 24 facing the housing 21. In this case, the connecting member 24 may have a through-hole opposite the electrode terminal 23, and the electrode terminal 23 may be connected to a sidewall of the through-hole for electrical connection between the electrode terminal 23 and the connecting member 24.

In this embodiment of this application, the first insulating portion 31 can insulate the connecting member 24 from the housing 21, so that the housing 21 is less likely to be electrified through an electrical connection between the connecting member 24 and the electrode assembly 22 when the distance between the connecting member 24 and the housing 21 is small, thereby improving the reliability of the battery cell 20. In addition, when the connecting member 24 and the housing 21 are pre-assembled, it is difficult to dispose an insulating component after the pre-assembly of the connecting member 24 and the housing 21. Therefore, the first insulating portion 31 can simplify the disposition of an insulating component between the connecting member 24 and the housing 21, improving the processing efficiency of the battery cell 20.

According to some embodiments of this application, the connecting member 24 includes a first connecting portion 241, the first connecting portion 241 is connected to the electrode assembly 22, the first insulating portion 31 includes a first insulating layer 311, and the first insulating layer 311 is disposed on a surface of the first connecting portion 241 facing away from the electrode assembly 22.

As shown in FIG. 4 and FIG. 5, the first connecting portion 241 is connected to the electrode assembly 22. Specifically, in a thickness direction of the first connecting portion 241, the surface of the first connecting portion 241 facing the electrode assembly 22 is electrically connected to the tab of the electrode assembly 22, and the surface of the first connecting portion 241 facing away from the electrode assembly 22 is provided with the first insulating layer 311. In this embodiment of this application, the thickness direction of the first connecting portion 241 may refer to a width direction Y of the battery cell 20.

In this embodiment of this application, a length direction X of the battery cell 20 refers to a direction indicated by the longest side of the battery cell 20, a thickness direction Z of the battery cell 20 refers to a direction indicated by the shortest side of the battery cell 20, and the width direction Y of the battery cell 20 refers to a direction indicated by a side of the battery cell 20 whose length is between the longest side and the shortest side of the battery cell 20. In other words, the dimension in the length direction X of the battery cell 20 is greater than the dimension in the width direction Y of the battery cell 20, and the dimension in the width direction Y of the battery cell 20 is greater than the dimension in the thickness direction Z of the battery cell 20.

In the structure shown in FIG. 5, the first connecting portion 241 is disposed opposite one wall of the housing 21 of the battery cell 20, and the first insulating layer 311 is disposed between this wall and the first connecting portion 241.

In some embodiments, the wall disposed opposite the first connecting portion 241 may be a sidewall of the battery cell 20. During the assembly process, space between the sidewall and the connecting member 24 is insufficient for attaching an insulating structure to the connecting member 24. Therefore, the first insulating layer 311 may be pre-disposed on the surface of the connecting member 24.

The distance between the first connecting portion 241 and the housing 21 of the battery cell 20 is small. Without the first insulating layer 311, the first connecting portion 241 is prone to contact the housing 21, causing the housing 21 to be electrified. Therefore, the first insulating layer 311 can insulate the connecting member 24 from the housing 21, so that the housing 21 is less likely to be electrified, thereby improving the reliability of the battery cell 20.

According to some embodiments of this application, a second insulating portion 32 is disposed on at least a portion of a surface of the first connecting portion 241 facing the electrode assembly 22.

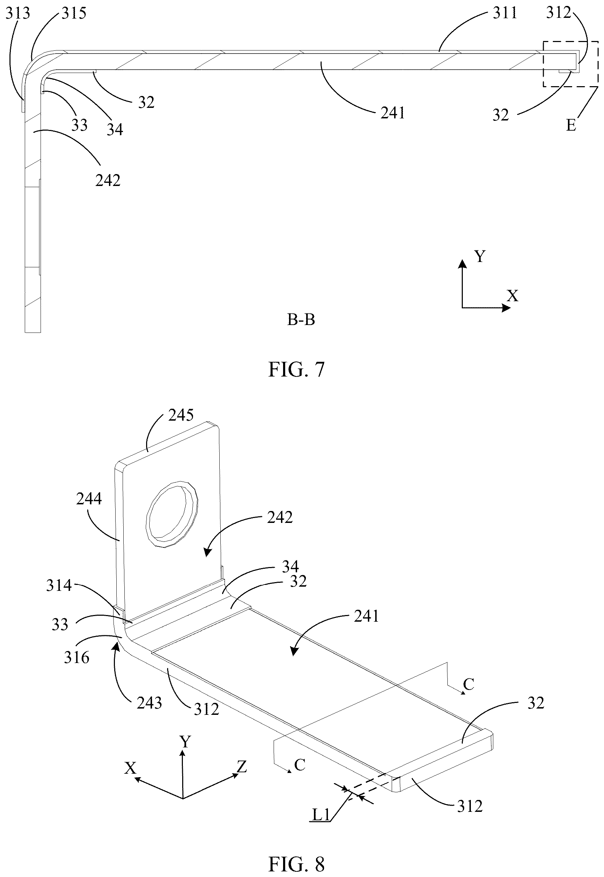

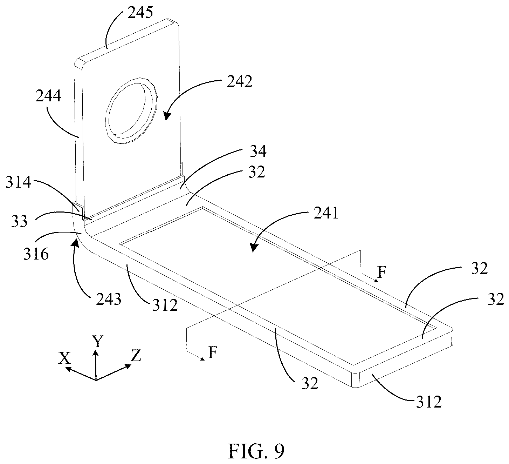

FIG. 6 is a schematic structural diagram of a connecting member 24 according to an embodiment of this application, FIG. 7 is a cross-sectional view of the connecting member 24 in FIG. 6 along the B-B direction, FIG. 8 is a schematic structural diagram of the structure in FIG. 6 from another perspective, and FIG. 9 is a schematic structural diagram of another connecting member 24. As shown in FIG. 6 to FIG. 9, the second insulating portion 32 is disposed on at least the portion of the surface of the first connecting portion 241 facing the electrode assembly 22.

In some embodiments, the surface of the first connecting portion 241 facing the electrode assembly 22 may include a portion connected to the tab of the electrode assembly 22, that is, the connection region of the first connecting portion 241, and a portion not connected to the tab of the electrode assembly 22, that is, the non-connection region of the first connecting portion 241. The second insulating portion 32 may be disposed on at least a portion of the non-connection region of the first connecting portion 241. This can provide space for the electrical connection between the electrode assembly 22 and the connecting member 24 while maximizing the insulation performance of the first connecting portion 241.

The second insulating portion 32 can provide insulation for the connecting member 24 on a side of the first insulating portion 31 facing the electrode assembly 22, enhancing the insulation performance of the first connecting portion 241 of the connecting member 24.

According to some embodiments of this application, the second insulating portion 32 is disposed at an edge of the surface of the first connecting portion 241 facing the electrode assembly 22, and a portion of the surface of the first connecting portion 241 facing the electrode assembly 22 is connected to the tab of the electrode assembly 22, where the portion of the surface is not provided with the second insulating portion 32.

The edge of the surface of the first connecting portion 241 facing the electrode assembly 22 may refer to edges of the first connecting portion 241 arranged in the thickness direction Z of the battery cell 20 and in the length direction X of the battery cell 20, and the second insulating portion 32 may be disposed in a region of at least one edge of the first insulating portion 31. For example, as shown in FIG. 8, the second insulating portion 32 may be disposed only in a region of at least one edge of the first connecting portion 241 along the length direction X of the battery cell 20. For another example, as shown in FIG. 9, the second insulating portion 32 may be disposed in a region of all edges of the first connecting portion 241.

This can provide insulation protection for the edge region of the first connecting portion 241, so that the housing body 210 is less likely to be electrified due to contact between the edge region of the first connecting portion 241 and the housing body 210.

According to some embodiments of this application, the first connecting portion 241 has a first surface, where the first surface connects the surface of the first connecting portion 241 facing the electrode assembly 22 and the surface of the first connecting portion 241 facing away from the electrode assembly 22; and the first insulating portion 31 includes a second insulating layer 312, where the second insulating layer 312 is disposed on at least a portion of the first surface.

The first connecting portion 241 may be a plate with a specified thickness, and the first surface may refer to a surface between the surface of the first connecting portion 241 facing the electrode assembly 22 and the surface of the first connecting portion 241 facing away from the electrode assembly 22 that can reflect the thickness of the first connecting portion 241. In some embodiments, the first surface may be perpendicular to the thickness direction Z of the battery cell 20, and in some embodiments, the first surface may alternatively be perpendicular to the length direction X of the battery cell 20.

The second insulating layer 312 is disposed on at least a portion of the first surface. As shown in FIG. 8 and FIG. 9, the entire first surface is covered by the second insulating layer 312. FIG. 8 and FIG. 9 show the second insulating layer 312 only but do not show the first surface. It can be understood that the surface of the first connecting portion 241 covered by the second insulating layer 312 is the first surface. In some embodiments, the second insulating layer 312 may be disposed only on a portion of the first surface. For example, the second insulating layer 312 may be disposed on a portion of the first surface that is prone to contact the housing body 210 or the end cap 213.

The second insulating layer 312 disposed on the first surface allows the surface of the first connecting portion 241 facing the housing 21 of the battery cell 20 to be covered with as much insulating structure as possible, thereby enhancing the insulation performance of the first connecting portion 241 and improving the reliability of the battery cell 20.

According to some embodiments of this application, the second insulating layer 312 is connected to at least one of the first insulating layer 311 and the second insulating portion 32.

In some embodiments, the second insulating layer 312 may be connected to the first insulating layer 311. As shown in FIG. 6 and FIG. 7, a corner between the surface of the first connecting portion 241 facing away from the electrode assembly 22 and the first surface can be insulated by connecting the second insulating layer 312 and the first insulating layer 311.

In some embodiments, the second insulating layer 312 may be connected to the second insulating portion 32. As shown in FIG. 8 and FIG. 9, the corner between the surface of the first connecting portion 241 facing the electrode assembly 22 and the first surface can be insulated by connecting the second insulating layer 312 and the second insulating portion 32.

In some embodiments, the second insulating layer 312 may be connected to both the first insulating layer 311 and the second insulating portion 32, so that the first insulating layer 311, the second insulating layer 312, and the second insulating portion 32 can be connected as a whole, forming a bent structure ranging from the surface of the first connecting portion 241 facing away from the electrode assembly 22 to the first surface, and then to the surface of the first connecting portion 241 facing the electrode assembly 22. This not only enhances the insulation performance at the corners of the first connecting portion 241 but also increases the adhesion of the first insulating layer 311, the second insulating layer 312, and the second insulating portion 32 on the surface of the first connecting portion 241, improving the insulation performance of the corresponding portions of the first connecting portion 241 and thereby enhancing the reliability of the battery cell 20.

This not only enhances the insulation performance at the corners of the first connecting portion 241 but also increases the adhesion of the first insulating layer 311, the second insulating layer 312, and the second insulating portion 32 on the surface of the first connecting portion 241, improving the insulation performance of the corresponding portions of the first connecting portion 241 and thereby enhancing the reliability of the battery cell 20. When the second insulating layer 312 is connected to both the first insulating layer 311 and the second insulating portion 32, the creepage distance between the first connecting portion 241 and the housing body 210 is increased, reducing the possibility of a short circuit with the first connecting portion 241.

According to some embodiments of this application, a surface of the housing 21 facing the tab of the electrode assembly 22 has a protrusion 214, and the second insulating layer 312 is disposed between a sidewall 2141 of the protrusion 214 and the first connecting portion 241.

As shown in FIG. 3 and FIG. 4, the protrusion 214 protrudes from a surface of the housing 21 facing the interior of the battery cell 20 toward the interior of the battery cell 20, and the sidewall 2141 of the protrusion 214 is at an angle to a top wall of the protrusion 214. Specifically, the protrusion 214 may protrude from a surface of the housing body 210 facing the tab of the electrode assembly 22. The protrusion 214 forms a recess on a surface of the housing body 210 facing away from the interior of the battery cell 20, and the accommodating space formed by the bottom wall and sidewall of the recess can typically be used to accommodate internal structures of the battery, such as thermal management components. Inside the battery cell 20, the sidewall 2141 of the protrusion 214 is close to the first connecting portion 241, and when the battery cell 20 is subjected to external forces such as shaking, the first connecting portion 241 may easily contact the protrusion 214, causing the housing body 210 of the battery cell 20 to be electrified.

The second insulating layer 312 is disposed between the sidewall 2141 of the protrusion 214 and the first connecting portion 241. Specifically, the second insulating layer 312 is disposed at a position where the first connecting portion 241 is prone to contact the protrusion 214. As shown in FIG. 4, on the first surface of the first connecting portion 241, the second insulating layer 312 is disposed on a portion facing the sidewall of the protrusion 214.

The second insulating layer 312 can reduce the possibility of electrification due to contact between the first connecting portion 241 and the sidewall 2141 of the protrusion 214, enhancing the insulation performance of the battery cell 20 and thereby improving the reliability of the battery cell 20.

According to some embodiments of this application, the connecting member 24 includes a second connecting portion 242, the second connecting portion 242 is bent relative to the first connecting portion 241, and the second connecting portion 242 is connected to the electrode terminal 23.

As shown in FIG. 3 to FIG. 9, the second connecting portion 242 is connected to the electrode terminal 23. In some embodiments, a surface of the second connecting portion 242 facing the housing 21 may be connected to the electrode terminal 23. In some embodiments, the second connecting portion 242 may have a through-hole opposite the electrode terminal 23, with at least a portion of the electrode terminal 23 accommodated in the through-hole, and the electrode terminal 23 may be electrically connected to the second connecting portion 242 through the sidewall of the through-hole and/or a surface of the second connecting portion 242 around the through-hole.

In some embodiments, the second connecting portion 242 and the first connecting portion 241 are located in different planes. For example, the plane where the second connecting portion 242 is located may be at an angle to the plane where the first connecting portion 241 is located, and the first connecting portion 241 and the second connecting portion 242 together form a bent shape.

The second connecting portion 242 allows for more flexible positioning of the electrode terminal 23, thereby enabling structures within the battery cell 20 to be arranged more flexibly.

According to some embodiments of this application, the first insulating portion 31 includes a third insulating layer 313, and the third insulating layer 313 is disposed on at least a portion of a surface of the second connecting portion 242 facing away from the electrode assembly 22.

The second connecting portion 242 may include a portion connected to the electrode terminal 23, that is, a connection region of the second connecting portion 242, and a portion not connected to the electrode terminal 23, that is, a non-connection region of the second connecting portion 242. In this case, an insulating structure may be disposed in at least a portion of the non-connection region of the second connecting portion 242.

In some embodiments, the third insulating layer 313 is disposed on at least a portion of a surface of the second connecting portion 242 facing away from the electrode assembly 22. Specifically, the third insulating layer 313 may be disposed in at least a portion of the non-connection region of the surface of the second connecting portion 242 facing away from the electrode assembly 22. For example, as shown in FIG. 5, the third insulating layer 313 is disposed on a portion of the surface of the second connecting portion 242 facing away from the electrode assembly 22, opposite a wall of the housing body 210 of the battery cell 20, for example, the first wall 211.

The third insulating layer 313 can insulate the second connecting portion 242 from the housing body 210 of the battery cell 20 so that the second connecting portion 242 is less likely to conduct electricity to the housing body 210 of the battery cell 20, thereby enhancing the insulation performance of the battery cell 20.

According to some embodiments of this application, the housing 21 includes an end cap 213 and a housing body 210, where the end cap 213 covers an opening of the housing body 210. The battery cell 20 further includes an insulating member 25, at least a portion of the insulating member 25 is disposed between the housing body 210 and the connecting member 24, and at least a portion of the third insulating layer 313 is disposed between the second connecting portion 242 and the insulating member 25.

The housing 21 of the battery cell 20 may include the housing body 210 and the end cap 213. The housing body 210 may be a hollow structure with an opening on at least one end, and the shape of the end cap 213 may be adapted to the shape of the housing body 210. The end cap 213 is configured to cover the opening of the housing body 210 to isolate the interior of the battery cell 20 from the exterior. If the housing body 210 is a hollow structure with an opening at one end, one end cap 213 may be provided; in contrast, if the housing body 210 is a hollow structure with openings at both opposite ends, two end caps 213 may be provided, each covering the opening at one end of the housing body 210. The housing body 210 fits the end cap 213 in shape. For example, as shown in FIG. 3, the housing body 210 may be a cuboid structure, and the end cap 213 may be a rectangular plate-shaped structure that fits with the housing body 210. For ease of description, an example is used herein, in which the housing 21 is a cuboid. The end cap 213 is connected to the housing body 210 to form an enclosed chamber for accommodating the electrode assembly 22, and the housing body 210 is filled with electrolyte, for example, an electrolyte solution.

The insulating member 25 is a structure inside the battery cell 20, configured to electrically isolate the housing 21 of the battery cell 20 from other structures inside the battery cell 20. For example, in this embodiment of this application, the connecting member 24 is electrically connected to the electrode terminal 23, and at least a portion of the insulating member 25 is disposed between the housing body 210 and the connecting member 24. In this way, the insulating member 25 is capable of insulating the housing 21 from the connecting member 24. At least a portion of the insulating member 25 may be disposed between the electrode terminal 23 and the housing 21, insulating the electrode terminal 23 from the housing 21.

In this embodiment of this application, as shown in FIG. 5, at least a portion of the third insulating layer 313 is disposed between the second connecting portion 242 and the insulating member 25. In some embodiments, when a projection of the insulating member 25 and the electrode terminal 23 in a direction perpendicular to the length direction X of the battery cell 20 covers the second connecting portion 242, the entire third insulating layer 313 may be disposed between the second connecting portion 242 and the insulating member 25.

Accordingly, a space may be provided between the insulating member 25 and the connecting member 24 for accommodating the third insulating layer 313. For example, a groove may be provided at a position on the insulating member 25 opposite the third insulating layer 313 for accommodating the second insulating layer 312. For another example, a groove may be provided at a position on the second connecting portion 242 opposite the third insulating layer 313 for accommodating the third insulating layer 313. For another example, a groove may be provided at both a position on the insulating member 25 opposite the third insulating layer 313 and a position on the second connecting portion 242 opposite the third insulating layer 313, and the two grooves form an accommodating space for the third insulating layer 313.

The third insulating layer 313 can further insulate the connecting member 24 from the insulating member 25, enhancing the effects of insulation between the second connecting portion 242 and the housing 21 and thereby improving the reliability of the battery cell 20.

According to some embodiments of this application, the insulating member 25 includes a first groove 251, and at least a portion of the third insulating layer 313 is accommodated in the first groove 251.

As shown in FIG. 5 to FIG. 10, the first groove 251 may be provided on the surface of the insulating member 25 facing the second connecting portion 242, the third insulating layer 313 extends along the surface of the second connecting portion 242, and a portion of the third insulating layer 313 disposed between the insulating member 25 and the second connecting portion 242 extends into the first groove 251.

In some embodiments, a thickness of the insulating member 25 is generally greater than a thickness of the second connecting portion 242. The first groove 251 provided on the insulating member 25 can reduce the impact on the structural strength of the insulating member 25 and the second connecting portion 242. In addition, this can further make the second connecting portion 242 uniform in thickness, improving the conduction effects of the second connecting portion 242.

The third insulating layer 313 disposed between the connecting member 24 and the insulating member 25 can increase the creepage distance between the connecting member 24 and the inner wall of the housing 21. The creepage distance refers to the shortest path measured along the insulating surface between two conductive components or between a conductive component and the protective interface of the device. In this embodiment of this application, the creepage distance between the second connecting portion 242 and the housing 21 refers to the shortest path through which the second connecting portion 242 and the housing 21 can be conducted via the insulating member 25.

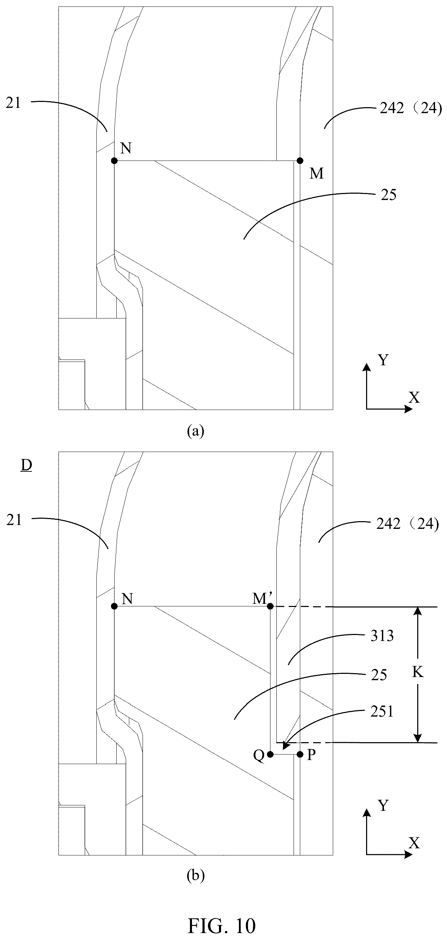

Specifically, as shown in FIG. 10(a), no third insulating layer 313 is disposed between the connecting member 24 and the insulating member 25. In this case, the creepage distance between the connecting member 24 and a wall of the housing 21 is the distance between points M and N. As shown in FIG. 10(b), the third insulating layer 313 is disposed between the connecting member 24 and the insulating member 25. In this case, the creepage distance between the connecting member 24 and a wall of the housing 21 refers to the distance of a broken line from point P, Q, M' to N. The distance of the broken line from point P, Q, M' to N is greater than the distance between points M and N. When the insulating member 25 is electrified, the electrified region of the insulating member 25 can be kept away from the inner wall of the housing 21, so that the housing 21 is less likely to be electrified.

The third insulating layer 313 can insulate the connecting member 24 from the housing 21 while increasing the creepage distance on the insulating member 25 between the housing 21 and the connecting member 24, so that the connecting member 24 and the housing 21 are less likely to be conducted due to electrification of the insulating member 25, thereby improving the reliability of the battery cell 20.

The third insulating layer 313 can insulate the connecting member 24 from the housing 21 while increasing the creepage distance between the housing 21 and the connecting member 24, so that the connecting member 24 and the housing 21 are less likely to be conducted due to electrification of the insulating member 25, thereby improving the reliability of the battery cell 20. Additionally, the first groove 251 can reduce the space occupied by the third insulating layer 313, increasing energy density.

According to some embodiments of this application, the second connecting portion 242 has a second surface 244, where the second surface 244 connects a surface of the second connecting portion 242 facing the electrode assembly 22 and a surface of the second connecting portion 242 facing away from the electrode assembly 22; and the first insulating portion 31 includes a fourth insulating layer 314, where the fourth insulating layer 314 covers at least a portion of the second surface 244.

The second connecting portion 242 may be a plate with a specified thickness, and the second surface 244 may refer to a surface between the surface of the second connecting portion 242 facing the electrode assembly 22 and the surface of the second connecting portion 242 facing away from the electrode assembly 22 that can reflect the thickness of the second connecting portion 242. In some embodiments, the second surface 244 may be perpendicular to the thickness direction Z of the battery cell 20, and in some embodiments, the second surface 244 may alternatively be perpendicular to the width direction Y of the battery cell 20. For example, the second surface 244 may include an end surface of the second connecting portion 242 in the width direction Y of the battery cell 20.

The fourth insulating layer 314 is disposed on at least a portion of the second surface 244. For example, the fourth insulating layer 314 may be disposed on a portion of the second surface 244 that is prone to contact the housing body 210 or the end cap 213. As shown in FIG. 8 and FIG. 9, only a portion of the second surface 244 is covered with the fourth insulating layer 314. In some embodiments, the entire second surface 244 may be covered with the fourth insulating layer 314.

The fourth insulating layer 314 allows the surface of the second connecting portion 242 to be covered with as much insulating structure as possible, thereby enhancing the insulation performance of the second connecting portion 242 and improving the reliability of the battery cell 20.

According to some embodiments of this application, a third insulating portion 33 is disposed on at least a portion of the surface of the second connecting portion 242 facing the electrode assembly 22.

The third insulating portion 33 is configured to insulate the surface of the second connecting portion 242 facing the electrode assembly 22 from the electrode assembly 22.

In some embodiments, considering that a separator is disposed on a side of the electrode assembly 22 facing the second connecting portion 242 for insulation purposes, the third insulating portion 33 may not be disposed on the portion, opposite the separator of the electrode assembly 22, of the surface of the second connecting portion 242 facing the electrode assembly 22. In this case, larger space can be provided inside the battery cell 20 for accommodating the electrode assembly 22.

In some embodiments, an end surface of the electrode assembly 22 facing the first connecting portion 241 may contact the second connecting portion 242. Specifically, when the battery cell 20 is subjected to external forces such as shaking or collision, a portion of this end surface close to the second connecting portion 242 may contact the second connecting portion 242 and cause electrical connection. In view of this, the third insulating portion 33 can insulate the electrode assembly 22 from the second connecting portion 242.

The third insulating portion 33 can provide insulation for the second connecting portion 242 on a side facing the electrode assembly 22, reducing the possibility of electrical conduction due to contact between the surface of the electrode assembly 22 facing the second connecting portion 242 and the second connecting portion 242.

According to some embodiments of this application, the fourth insulating layer 314 is connected to at least one of the third insulating layer 313 and the third insulating portion 33.

In this embodiment of this application, the third insulating layer 313 is disposed on the surface of the second connecting portion 242 facing away from the electrode assembly 22, the third insulating portion 33 is disposed on the surface of the second connecting portion 242 facing the electrode assembly 22, and the fourth insulating layer 314 is disposed on the second surface 244 of the second connecting portion 242. The fourth insulating layer 314 may be connected to the third insulating layer 313, the fourth insulating layer 314 may be connected to the third insulating portion 33, or the fourth insulating layer 314 may be connected to both the third insulating layer 313 and the third insulating portion 33.

In some embodiments, the fourth insulating layer 314 may be connected to the third insulating layer 313. As shown in FIG. 6, a corner between the surface of the second connecting portion 242 facing away from the electrode assembly 22 and the second surface 244 can be insulated by connecting the second insulating layer 312 and the first insulating layer 311.

In some embodiments, the fourth insulating layer 314 may be connected to the third insulating portion 33. As shown in FIG. 8 and FIG. 9, a corner between the surface of the second connecting portion 242 facing the electrode assembly 22 and the second surface 244 can be insulated by connecting the fourth insulating layer 314 and the third insulating portion 33.

In some embodiments, the fourth insulating layer 314 may be connected to both the third insulating layer 313 and the third insulating portion 33, so that the fourth insulating layer 314, the third insulating layer 313, and the third insulating portion 33 can be connected as a whole, forming a bent structure ranging from the surface of the second connecting portion 242 facing away from the electrode assembly 22 to the second surface 244, and then to the surface of the second connecting portion 242 facing the electrode assembly 22. Further, a structure around the second connecting portion 242 can also be formed. This not only enhances the insulation performance at the corners between different surfaces of the second connecting portion 242 but also increases the adhesion of the third insulating layer 313, the fourth insulating layer 314, and the third insulating portion 33 on the surface of the second connecting portion 242, improving the insulation performance of the corresponding portions of the second connecting portion 242 and thereby enhancing the reliability of the battery cell 20.

This not only enhances the insulation performance at the corners between different surfaces of the second connecting portion 242 but also increases the adhesion of the third insulating layer 313, the fourth insulating layer 314, and the third insulating portion 33 on the surface of the second connecting portion 242, improving the insulation performance of the corresponding portions of the second connecting portion 242 and thereby enhancing the reliability of the battery cell 20. When the fourth insulating layer 314 is connected to both the third insulating layer 313 and the third insulating portion 33, the creepage distance between the second connecting portion 242 and the housing body 210 is increased, reducing the possibility of conduction between the second connecting portion 242 and the housing body 210.

According to some embodiments of this application, the connecting member 24 includes the first connecting portion 241, the second connecting portion 242, and a third connecting portion 243, where the first connecting portion 241 is connected to the electrode assembly 22, the second connecting portion 242 is connected to the electrode terminal 23, and the third connecting portion 243 is bent and connects the first connecting portion 241 and the second connecting portion 242.

As shown in FIG. 5 to FIG. 10, the first connecting portion 241 and the second connecting portion 242 may extend in different directions, and the entire connecting member 24 has a bent shape, so the first connecting portion 241 and the second connecting portion 242 can be connected through the third connecting portion 243. In some embodiments, the third connecting portion 243 may be a plate with an arc shape. Specifically, the third connecting portion 243 may have an arc shape in the A-A cross section shown in FIG. 3 and FIG. 4. In some embodiments, the third connecting portion 243 may alternatively be a plate of other shapes. For example, it may be a flat plate forming a certain angle with the first connecting portion 241 and the second connecting portion 242 respectively, thereby connecting the first connecting portion 241 and the second connecting portion 242 that extend in different directions.

The third connecting portion 243 can connect the first connecting portion 241 and the second connecting portion 242 that extend in different directions, so that the electrode assembly 22 and the battery cell 20 located in two intersecting planes can be electrically connected, allowing internal structures within the battery cell 20 to be arranged more flexibly.

According to some embodiments of this application, the first insulating portion 31 includes a fifth insulating layer 315, and the fifth insulating layer 315 is disposed on at least a portion of a surface of the third connecting portion 243 facing away from the electrode assembly 22.

As shown in FIG. 4 to FIG. 9, the fifth insulating layer 315 may extend along the surface of the third connecting portion 243 facing away from the electrode assembly 22. For example, the cross sections of planes of the third connecting portion 243 formed in the width direction Y and the length direction of the battery cell 20 are arc-shaped, and the cross section of the same plane of the fifth insulating layer 315 is also arc-shaped.

In some embodiments, the fifth insulating layer 315 may be connected to the first insulating layer 311 and the third insulating layer 313. For example, the first insulating layer 311, the third insulating layer 313, and the fifth insulating layer 315 may be connected integrally. This allows different portions of the insulating layers to cover the surface of the connecting member 24 in a dense manner, so that gaps are less likely to be generated between different portions of the insulating layers, improving the insulation performance of the connecting member 24.

The fifth insulating layer 315 can provide insulation for the connecting member 24 on a side of the third connecting portion 243 facing the housing 21, insulating the third connecting portion 243 from the housing body 210. In this way, the housing 21 is less likely to be electrified.

According to some embodiments of this application, the third connecting portion 243 has a third surface, where the third surface connects a surface of the third connecting portion 243 facing the electrode assembly 22 and the surface of the third connecting portion 243 facing away from the electrode assembly 22; and the first insulating portion 31 includes a sixth insulating layer 316, where the sixth insulating layer 316 is disposed on at least a portion of the third surface.

The third connecting portion 243 has a specified thickness, and the third surface may refer to a surface between the surface of the third connecting portion 243 facing the electrode assembly 22 and the surface of the third connecting portion 243 facing away from the electrode assembly 22 that can reflect the thickness of the third connecting portion 243. In some embodiments, the third surface may be perpendicular to the thickness direction Z of the battery cell 20.

In the battery cell 20, the third surface is typically close to the end cap 213 or the bottom wall of the housing body 210 of the battery cell 20. Therefore, the sixth insulating layer 316 may be disposed on at least a portion of the third surface. As shown in FIG. 6 to FIG. 9, the entire third surface is covered by the sixth insulating layer 316. FIG. 6 to FIG. 9 show only the sixth insulating layer 316 but do not show the third surface. It can be understood that the surface of the third connecting portion 243 covered by the sixth insulating layer 316 is the first surface. In some embodiments, the sixth insulating layer 316 may be disposed only on a portion of the third surface. For example, the sixth insulating layer 316 may be disposed on a portion of the third surface that is prone to contact the housing body 210 or the end cap 213.

The sixth insulating layer 316 allows the surface of the third connecting portion 243 facing the housing 21 of the battery cell 20 to be covered with as much insulating structure as possible, thereby enhancing the insulation performance of the third connecting portion 243 and improving the reliability of the battery cell 20.

According to some embodiments of this application, a fourth insulating portion 34 is disposed on at least a portion of the surface of the third connecting portion 243 facing the electrode assembly 22.

In the battery cell 20, the third connecting portion 243 does not need to be electrically connected to the electrode assembly 22 or the electrode terminal 23. However, during practical use of the battery cell 20, a side of the third connecting portion 243 facing the electrode assembly 22 is prone to contact the electrode assembly 22 and become electrified. Therefore, the fourth insulating portion 34 is disposed on at least a portion of the surface of the third connecting portion 243 facing the electrode assembly 22 to enhance the performance of insulation between the third connecting portion 243 and the electrode assembly 22.

The fourth insulating portion 34 can insulate the surface of the third connecting portion 243 facing the electrode assembly 22, reducing the possibility of electrical connection between the electrode assembly 22 and the third connecting portion 243.

According to some embodiments of this application, the sixth insulating layer 316 is connected to at least one of the fifth insulating layer 315 and the fourth insulating portion 34.

In this embodiment of this application, the fifth insulating layer 315 is disposed on the surface of the third connecting portion 243 facing away from the electrode assembly 22, the fourth insulating portion 34 is disposed on the surface of the third connecting portion 243 facing the electrode assembly 22, and the sixth insulating layer 316 is disposed on the third surface of the third connecting portion 243. The sixth insulating layer 316 may be connected to the fifth insulating layer 315, the sixth insulating layer 316 may be connected to the fourth insulating portion 34, or the sixth insulating layer 316 may be connected to both the fifth insulating layer 315 and the fourth insulating portion 34.

In some embodiments, the sixth insulating layer 316 may be connected to the fifth insulating layer 315. As shown in FIG. 6, a corner between the surface of the third connecting portion 243 facing away from the electrode assembly 22 and the third surface can be insulated by connecting the sixth insulating layer 316 and the fifth insulating layer 315.

In some embodiments, the sixth insulating layer 316 may be connected to the fourth insulating portion 34. As shown in FIG. 8 and FIG. 9, the corner between the surface of the third connecting portion 243 facing the electrode assembly 22 and the third surface can be insulated by connecting the sixth insulating layer 316 and the fourth insulating portion 34.

In some embodiments, the sixth insulating layer 316 may be connected to both the fifth insulating layer 315 and the fourth insulating portion 34, so that the sixth insulating layer 316, the fifth insulating layer 315, and the fourth insulating portion 34 can be connected as a whole, forming a bent structure ranging from the surface of the third connecting portion 243 facing away from the electrode assembly 22 to the third surface, and then to the surface of the third connecting portion 243 facing the electrode assembly 22. Further, a structure around the third connecting portion 243 can also be formed. This not only enhances the insulation performance at the corners between different surfaces of the third connecting portion 243 but also increases the adhesion of the fifth insulating layer 315, the sixth insulating layer 316, and the fourth insulating portion 34 on the surface of the third connecting portion 243, improving the insulation performance of the corresponding portions of the third connecting portion 243 and thereby enhancing the reliability of the battery cell 20.

This not only enhances the insulation performance at the corners between different surfaces of the third connecting portion 243 but also increases the adhesion of the fifth insulating layer 315, the sixth insulating layer 316, and the fourth insulating portion 34 on the surface of the third connecting portion 243, improving the insulation performance of the corresponding portions of the third connecting portion 243 and thereby enhancing the reliability of the battery cell 20.

According to some embodiments of this application, a second insulating portion 32 is disposed on at least a portion of a surface of the first connecting portion 241 facing the electrode assembly 22, a third insulating portion 33 is disposed on at least a portion of a surface of the second connecting portion 242 facing the electrode assembly 22, and a fourth insulating portion 34 is disposed on at least a portion of a surface of the third connecting portion 243 facing the electrode assembly 22, where the first insulating portion 31, the second insulating portion 32, the third insulating portion 33, and the fourth insulating portion 34 are integrally formed.

In some embodiments, the first insulating portion 31, the second insulating portion 32, the third insulating portion 33, and the fourth insulating portion 34 may be prepared by means of injection molding. Specifically, the first insulating portion 31, the second insulating portion 32, the third insulating portion 33, and the fourth insulating portion 34 may be formed on the surface of the connecting member 24 by means of injection molding, so that the connecting member 24, the first insulating portion 31, the second insulating portion 32, the third insulating portion 33, and the fourth insulating portion 34 are assembled as a whole with other components in the battery cell 20. In this way, an insulating component does not need to be attached to the connecting member 24 after the connecting member 24 is connected to the electrode assembly 22 or the electrode terminal 23.

On one hand, this can enhance the adhesion of the first insulating portion 31, the second insulating portion 32, the third insulating portion 33, and the fourth insulating portion 34 on the connecting member 24, reducing connection gaps between insulating components in different regions of the connecting member 24 and improving the connection strength between insulating components in different regions of the connecting member 24. On the other hand, the first insulating portion 31, the second insulating portion 32, the third insulating portion 33, and the fourth insulating portion 34 can be integrally formed using methods such as injection molding, improving assembly efficiency.

According to some embodiments of this application, the housing 21 includes an end cap 213 and a housing body 210, where the end cap 213 covers an opening of the housing body 210, and the electrode terminal 23 is disposed on the housing body 210.

As shown in FIG. 3 to FIG. 5, the housing body 210 of the battery cell 20 may be a hollow structure with an opening, the housing body 210 includes multiple walls, and the multiple walls enclose an accommodating space. The housing body 210 may have an opening at one end, and the battery cell 20 may include one end cap 213 for covering the opening. In some embodiments, the housing body 210 may have an opening at both ends, and the battery cell 20 may include two end caps 213 for covering the openings at both ends of the housing body 210. The shape of the housing body 210 may be determined based on the shape of a combination of one or more electrode assemblies 22. For example, the housing body 210 may be a hollow cuboid, cube, or cylinder, and at least one surface of the housing body 210 has an opening so that one or more electrode assemblies 22 can be placed inside the housing body 210. For example, when the housing body 210 is a hollow cuboid or cube, one surface of the housing body 210 has an opening. That is, this surface does not have a wall, allowing communication between the interior and exterior of the housing body 210. When the housing body 210 is a hollow cylinder, an end surface of the housing body 210 has an opening. That is, this end surface does not have a wall, allowing communication between the interior and exterior of the housing body 210. The end cap 213 may be a wall covering the opening and connected to the housing body 210, and the end cap 213 is sealingly connected to the housing body 210 to form an enclosed chamber for accommodating the electrode assembly 22.

In some embodiments, the electrode terminal 23 may be disposed on the housing body 210. Specifically, the positive electrode terminal and the negative electrode terminal may be disposed on the same wall or different walls of the housing body 210. For example, as shown in FIG. 3, one electrode terminal 23 disposed on only one of the walls of the housing 21. In some embodiments, another electrode terminal 23 may be disposed on a wall opposite this wall. In some embodiments, it may alternatively be disposed on a wall intersecting with this wall. In some embodiments, it may alternatively be disposed on this wall.

Disposing the electrode terminal 23 on the housing body 210 facilitates the integration of the electrode terminal 23 with the housing body 210, so that the electrode terminal 23 can be disposed on the housing body 210 more reliably.

According to some embodiments of this application, the housing body 210 include a first wall 211 and second wall 212 that are adjacent, the electrode terminal 23 is disposed on the first wall 211, and a side of the electrode assembly 22 facing the second wall 212 is provided with the tab.

As shown in FIG. 3 to FIG. 5, the housing body 210 may include a sidewall and a bottom wall, where the bottom wall is opposite the opening of the housing body 210. That is, the bottom wall is opposite the end cap 213. The area of the bottom wall is greater than the area of the first wall 211, and the area of the bottom wall may alternatively be greater than the area of the second wall 212. In some embodiments, the first wall 211 and the second wall 212 may both be sidewalls of the housing body 210. In some embodiments, the first wall 211 and the second wall 212 may be a sidewall and a bottom wall of the housing body 210 respectively.

The first wall 211 and the second wall 212 are connected, the electrode terminal 23 is disposed on the first wall 211 and electrically connected to the connecting member 24, and the tab of the electrode assembly 22 extends toward the second wall 212 and is electrically connected to the same connecting member 24. In other words, the connecting member 24 is bent inside the battery cell 20, connecting the electrode terminal 23 on the first wall 211 and the tab facing the second wall 212.

This structure allows for more flexible positioning of the electrode terminal 23 and the tab, enabling the electrode terminal 23 and the tab to be arranged according to different requirements. Additionally, the connecting member 24 in a bent shape facilitates electrical connection between the electrode terminals 23 in different positions and the tab, making the internal structural arrangement of the battery cell 20 more flexible.

According to some embodiments of this application, the end cap 213 is connected to the first wall 211 and the second wall 212, a projected area of the end cap 213 in a direction perpendicular to a thickness direction of the end cap 213 is larger than a projected area of the first wall 211 in a direction perpendicular to a thickness direction of the first wall 211, and the projected area of the end cap 213 in the direction perpendicular to the thickness direction of the end cap 213 is larger than a projected area of the second wall 212 in a direction perpendicular to a thickness direction of the second wall 212.

The housing body 210 of the battery cell 20 may include the first wall 211 and the second wall 212. In some embodiments, the sidewalls of the housing body 210 include the first wall 211 and the second wall 212, and the end cap 213, when covering the housing body 210, may be connected to both the first wall 211 and the second wall 212.

The end cap 213 may be approximately a flat plate-shaped structure, and the projected area of the end cap 213 in the direction perpendicular to the thickness direction of the end cap 213 is the area of the end cap 213. Similarly, the first wall 211 and the second wall 212 may also be approximately flat plate-shaped structures, the projected area of the first wall 211 in the direction perpendicular to the thickness direction of the end cap 213 is the area of the first wall 211, and the projected area of the second wall 212 in the direction perpendicular to the thickness direction of the end cap 213 is the area of the second wall 212.

In some embodiments, the area of the end cap 213 is larger than the area of the first wall 211. Specifically, when the battery cell 20 includes multiple first walls 211, the area of the end cap 213 may be larger than the area of each first wall 211. In some embodiments, the area of the end cap 213 is larger than the area of the second wall 212. Specifically, when the battery cell 20 includes multiple second walls 212, the area of the end cap 213 may be larger than the area of each second wall 212. In some embodiments, the area of the end cap 213 may be larger than the area of the first wall 211 and the area of the second wall 212.

When the area of the end cap 213 is large, the connecting member 24 is connected to the electrode terminal 23 at a portion corresponding to the first wall 211 and connected to the electrode assembly 22 at a portion corresponding to the second wall 212, resulting in fewer portions of the connecting member 24 that may contact the end cap 213. In this way, the connecting member 24 can be insulated from the end cap 213 by using less insulating structure.

According to some embodiments of this application, a melting point of the first insulating portion 31 is greater than or equal to 100°C.

The connecting member 24 and the tab of the electrode assembly 22 are typically connected by laser welding, and the insulating components on the surface of the connecting member 24 need to maintain their original state under the high temperature generated by welding to provide reliable insulation performance. In some embodiments, the melting point of the first insulating portion 31 being greater than 100°C can effectively reduce the impact of the welding between the connecting member 24 and the tab of the electrode assembly 22 on the first insulating portion 31. This achieves good insulation between the first insulating portion 31 and the first connecting portion 241, improving the reliability of the battery cell 20. In some embodiments, the material of the first insulating portion 31 may be FPA, polypropylene (polypropylene, PP), or the like.

In some embodiments, a melting point of the second insulating portion 32 may be greater than or equal to 100°C. For example, it may be 100°C, 120°C, 200°C, 250°C, 300°C, 380°C, 400°C, 500°C, or the like. The material of the second insulating portion 32 may specifically be soluble polytetrafluoro-ethylene (polytetrafluoro-ethylene, FPA), polypropylene (polypropylene, PP), polyvinyl chloride, or the like.

According to some embodiments of this application, a dimension of a portion of the fourth insulating layer 314 located between the second connecting portion 242 and the insulating member 25 in the width direction Y of the battery cell 20 is K, where K satisfies 1 mm ≤ K ≤ 5 mm.

As shown in FIG. 5 to FIG. 10, in this embodiment of this application, the second connecting portion 242 may extend in the width direction Y of the battery cell 20, and the dimension of the portion of the fourth insulating layer 314 located between the second connecting portion 242 and the insulating member 25 in the width direction Y of the battery cell 20 is K, where K satisfies 1 mm ≤ K ≤ 5 mm. For example, K may be 1 mm, 1.3 mm, 2 mm, 2.4 mm, 3 mm, 3.2 mm, 4 mm, 4.5 mm, 5 mm, or the like. When K falls within the that numerical range, the creepage distance between the second connecting portion 242 and the housing 21 is effectively increased, making the housing 21 less likely to be electrified. In addition, this can also reduce the possibility of the second insulating layer 312 interfering with the connection between the second connecting portion 242 and the electrode terminal 23.

According to some embodiments of this application, an end, away from the edge of the connecting member 24, in a portion of the second insulating portion 32 disposed at an edge of the first connecting portion 241 is at a distance of L1 from the edge of the connecting member 24, where L1 satisfies 1 mm ≤ L1 ≤ 5 mm.

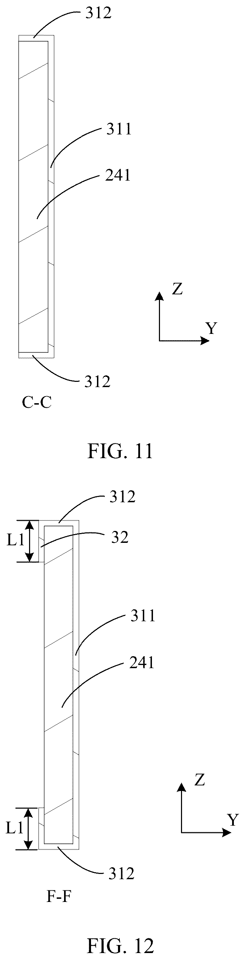

FIG. 11 is a schematic cross-sectional structural diagram of the structure of the connecting member 24, the first insulating portion 31, and the second insulating portion 32 in FIG. 8 along the C-C direction, and FIG. 12 is a schematic cross-sectional structural diagram of the structure of the connecting member 24, the first insulating portion 31, and the second insulating portion 32 in FIG. 9 along the F-F direction. As shown in FIG. 11 and FIG. 12, the portion of the second insulating portion 32 disposed at the edge of the first connecting portion 241 may extend from the edge of the first connecting portion 241 along the surface of the first connecting portion 241 facing the electrode assembly 22. In some embodiments, in a direction perpendicular to the edge of the first connecting portion 241, the dimension of the second connecting portion 242 is L1, where L1 satisfies 1 mm ≤ L1 ≤ 5 mm. For example, L1 may be 1 mm, 2 mm, 2.2 mm, 3 mm, 3.6 mm, 4 mm, 4.2 mm, 5 mm, or the like. When L1 falls within that numerical range, the adhesion of the first insulating portion 31 and the second insulating portion 32 on the connecting member 24 can be effectively increased, making the first insulating portion 31 and the second insulating portion 32 less likely to detach from the connecting member 24, thereby providing good insulation performance for the battery cell 20.

According to some embodiments of this application, in a thickness direction of the first connecting portion 241, the distance between an end of the fourth insulating layer 314 close to the electrode assembly 22 and a surface of the electrode assembly 22 facing the first connecting portion 241 is S, where S satisfies 0.1 mm ≤ S ≤ 1 mm.

The electrode assembly 22 is typically formed by winding or stacking a positive electrode plate, a negative electrode plate, and a separator, with a tab extending from one surface of the electrode assembly 22 and protruding from that surface.

The stacking direction of the positive electrode plate and the negative electrode plate is the thickness direction of the end cap 213. In some embodiments, the electrode assembly 22 is stacked by winding. The wound electrode assembly 22 includes a stacking region and a bending region. The stacking region and the bending region are sequentially connected to form an oblate-shaped electrode assembly 22, and the arrangement direction of the electrode plates in the stacking region is the stacking direction of the positive electrode plate and the negative electrode plate. In some embodiments, the electrode assembly 22 is stacked by stacking. For example, it may be that one continuous electrode plate and multiple cut electrode plates are stacked, or multiple cut positive electrode plates and multiple cut negative electrode plates are stacked. In this case, the arrangement direction of the stacked electrode plates is the stacking direction of the positive electrode plate and the negative electrode plate.

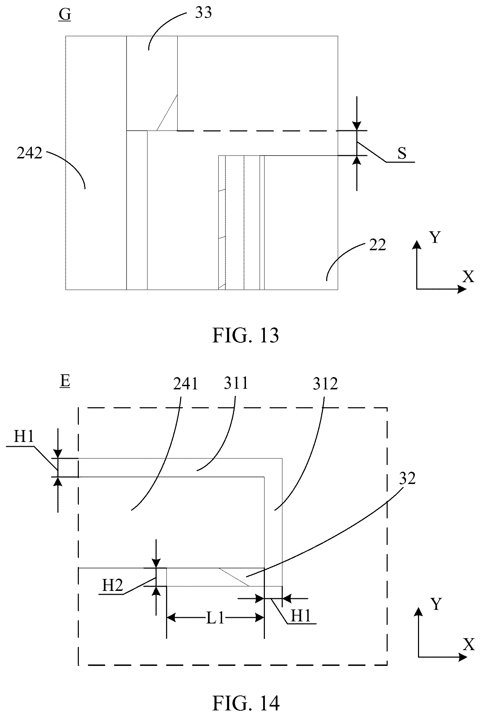

In this embodiment of this application, the tab of the electrode assembly 22 is connected to the first connecting portion 241, and the surface of the electrode assembly 22 is opposite the first connecting portion 241. The distance between an end of the fourth insulating layer 314 close to the electrode assembly 22 and the surface of the electrode assembly 22 facing the first connecting portion 241 is S. As shown in FIG. 13, FIG. 13 is a schematic diagram of an enlarged structure of portion G in FIG. 5. S satisfies 0.1 mm ≤ S ≤ 1 mm. For example, S may be 0.1 mm, 0.2 mm, 0.26 mm, 0.3 mm, 0. mm, 0.4 mm, 0.5 mm, 0.58 mm, 0.6 mm, 0.7 mm, 0.8 mm, 0.83 mm, 0.9 mm, 1 mm, or the like. When S falls within that numerical range, the electrode assembly 22 is less likely to interfere with the second insulating portion 32, and the third connecting portion 243 is insulated as much as possible.

According to some embodiments of this application, a thickness of the first insulating portion 31 is H1, where H1 satisfies 0.2 mm ≤ H1 ≤ 0.8 mm.

FIG. 14 is a schematic diagram of an enlarged structure of portion E in FIG. 7. As shown in FIG. 14, in some embodiments, the first insulating portion 31 may be a film with a uniform thickness, and the thickness of the first insulating portion 31 may be H1 in FIG. 12, where H1 satisfies 0.2 mm ≤ H1 ≤ 0.8 mm. For example, H1 may be 0.2 mm, 0.26 mm, 0.3 mm, 0. mm, 0.4 mm, 0.42 mm, 0.5 mm, 0.58 mm, 0.6 mm, 0.7 mm, 0.8 mm, or the like. When the thickness of the first insulating portion 31 falls within that range, the first insulating portion 31 can properly insulate the first connecting portion 241 from the housing 21, without occupying excessive internal space of the battery cell 20.

Similarly, the thickness of the second insulating portion 32 is H2, where H2 may satisfy 0.2 mm ≤ H2 ≤ 0.8 mm. For example, H2 may be 0.2 mm, 0.26 mm, 0.3 mm, 0.4 mm, 0.42 mm, 0.5 mm, 0.58 mm, 0.6 mm, 0.7 mm, 0.8 mm, or the like. Similarly, the thickness of the third insulating portion 33 and the fourth insulating portion 34 may also be within that numerical range.

An embodiment of this application further provides a battery, including the battery cell 20 according to any one of the foregoing embodiments.

An embodiment of this application further provides an electric apparatus, including the battery according to any one of the foregoing embodiments, where the battery is configured to supply electric energy to the electric apparatus.

An embodiment of this application further provides an energy storage apparatus, including the battery according to any one of the foregoing embodiments.

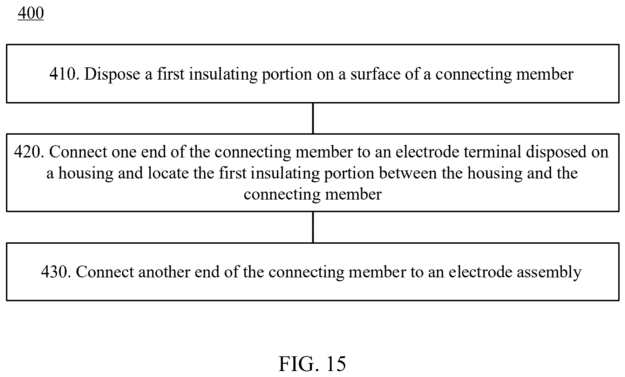

An embodiment of this application further provides a method 400 for preparing a battery cell 20, used for preparing the battery cell 20 according to any one of the foregoing embodiments. Specifically, as shown in FIG. 15, the method 400 includes at least the following steps.

410. Dispose a first insulating portion 31 on a surface of a connecting member 24.

420. Connect one end of the connecting member 24 to an electrode terminal 23 disposed on a housing 21 and locate the first insulating portion 31 between the housing 21 and the connecting member 24.

430. Connect another end of the connecting member 24 to an electrode assembly 22.

In the method for preparing the battery cell 20, the first insulating portion 31 may be disposed on the surface of the connecting member 24. Specifically, when the connecting member 24 is in an assembled state, the first insulating portion 31 may be disposed on at least a portion of the surface of the connecting member 24 facing the housing 21.

The connecting member 24 provided with the first insulating portion 31 is connected to the electrode terminal 23. Specifically, the electrode terminal 23 is disposed on the housing 21 of the battery cell 20, the connecting member 24 is disposed inside the battery cell 20, and the surface of the connecting member 24 provided with the first insulating portion 31 faces the housing 21 of the battery cell 20. In this case, when one end of the connecting member 24 is connected to the electrode terminal 23, the first insulating portion 31 is already provided between the connecting member 24 and the housing 21, and therefore another insulating structure does not need to be disposed on the surface of the connecting member 24.

Another end of the connecting member 24 is connected to the electrode assembly 22, where the surface of the connecting member 24 connected to the electrode assembly 22 is provided with the first insulating portion 31, and one end of the connecting member 24 is connected to the electrode terminal 23. In other words, when the connecting member 24 is connected to the electrode terminal 23 and the electrode assembly 22, the surface of the connecting member 24 facing the housing 21 of the battery cell 20 is already provided with the first insulating portion 31. In this case, another insulating structure does not need to be disposed on the surface of the connecting member 24 after the electrode terminal 23 and the electrode assembly 22 are connected.

The first insulating portion 31 is disposed on the surface of the connecting member 24 before the connecting member 24 is connected to the electrode terminal 23 and the electrode assembly 22. The method for preparing the battery cell 20 provided by this embodiment of this application can simplify the disposition of the first insulating portion 31 between the connecting member 24 and the housing 21, while the first insulating portion 31 can properly insulate the connecting member 24 from the housing 21, thereby improving the reliability of the battery cell 20.

According to some embodiments of this application, the connecting member 24 includes a first connecting portion 241, a second connecting portion 242, and a third connecting portion 243, where the first connecting portion 241 is connected to the electrode assembly 22, the second connecting portion 242 is connected to the electrode terminal 23, and the third connecting portion 243 connects the first connecting portion 241 and the second connecting portion 242.

The first connecting portion 241 and the second connecting portion 242 can extend in different directions, and the entire connecting member 24 has a bent shape, so the first connecting portion 241 and the second connecting portion 242 can be connected through the third connecting portion 243. With the third connecting portion 243, the electrode assembly 22 and the battery cell 20 located in two intersecting planes can be electrically connected, allowing internal structures within the battery cell 20 to be arranged more flexibly.

According to some embodiments of this application, the method 400 further includes: integrally forming the first insulating portion 31, a second insulating portion 32, a third insulating portion 33, and a fourth insulating portion 34 on the surface of the connecting member 24, while placing the second insulating portion 32 between the electrode assembly 22 and the first connecting portion 241, the third insulating portion 33 between the electrode assembly 22 and the second connecting portion 242, and the fourth insulating portion 34 between the electrode assembly 22 and the third connecting portion 243.

The surface of the connecting member 24 may also be provided with the second insulating portion 32, the third insulating portion 33, and the fourth insulating portion 34. During the process of connecting the connecting member 24 to the electrode terminal 23 and the electrode assembly 22, the second insulating portion 32 is located between the electrode assembly 22 and the first connecting portion 241, the third insulating portion 33 is located between the electrode assembly 22 and the second connecting portion 242, and the third insulating portion 33 is located between the electrode assembly 22 and the second connecting portion 242. In this embodiment of this application, the second insulating portion 32, the third insulating portion 33, and the fourth insulating portion 34 are all disposed on the surface of the connecting member 24 facing the electrode assembly 22.

This can achieve insulation between the surface of the connecting member 24 facing the electrode assembly 22 and the electrode assembly 22 when the connecting member 24 is assembled, improving the insulation performance of the battery cell 20.

According to some embodiments of this application, the housing 21 includes an end cap 213 and a housing body 210. The method 400 further includes: using the end cap 213 to cover an opening of the housing body 210, when one end of the connecting member 24 is connected to the electrode terminal 23 disposed on the housing 21 with the first insulating portion 31 placed between the housing 21 and the connecting member 24, and another end of the connecting member 24 is connected to the electrode assembly 22.

The electrode assembly 22 can be placed into an accommodating space within the housing body 210 through the opening of the housing body 210, and the end cap 213 covers the opening of the housing body 210. Specifically, the connection between the end cap 213 and the housing body 210 can be sealed by welding or other methods to make the housing 21 formed by the end cap 213 and the housing body 210 as sealed as possible, which helps improve the reliability of the battery cell 20.

According to some embodiments of this application, the housing body 210 includes a sidewall and a bottom wall, where the bottom wall is opposite the opening. Step 420 may specifically include: connecting one end of the connecting member 24 to the electrode terminal 23 disposed on the housing 21 while placing the first insulating portion 31 between the sidewall and the connecting member 24.

In this embodiment of this application, the surface of the connecting member 24 opposite the sidewall of the housing body 210 has a large area and is close to the housing body 210, and therefore it tends to contact the housing body 210, causing the housing body 210 to be electrified. Therefore, during the process of connecting one end of the connecting member 24 to the electrode terminal 23 disposed on the housing 21, the first insulating portion 31 is disposed between the sidewall of the housing body 210 and the connecting member 24. This enables the first insulating portion 31 to provide good insulation performance inside the battery cell 20, thereby improving the reliability of the battery cell 20.

An embodiment of this application provides a battery cell 20, where the battery cell 20 includes a housing 21, an electrode assembly 22, an electrode terminal 23, and a connecting member 24. The housing 21 includes a housing body 210 and an end cap 213, the housing body 210 includes a first wall 211 and a second wall 212 that are adjacent, the electrode terminal 23 is disposed on the first wall 211, and a tab of the electrode assembly 22 is located on a side of the electrode assembly 22 facing the second wall 212. The connecting member 24 includes a first connecting portion 241, a second connecting portion 242, and a third connecting portion 243, where the first connecting portion 241 is connected to the electrode assembly 22 and disposed between the electrode assembly 22 and the second wall 212, the second connecting portion 242 is connected to the electrode terminal 23 and disposed between the first wall 211 and the electrode assembly 22, and the third connecting portion 243 connects the first connecting portion 241 and the second connecting portion 242.

A first insulating portion 31 is disposed on at least a portion of a surface of the connecting member 24 facing the housing 21, and the first insulating portion 31 includes a first insulating layer 311, a second insulating layer 312, a third insulating layer 313, a fourth insulating layer 314, a fifth insulating layer 315, and a sixth insulating layer 316.

The first insulating layer 311 is disposed on a surface of the first connecting portion 241 facing away from the electrode assembly 22, the second insulating layer 312 is disposed on the first surface, and a second insulating portion 32 is disposed on a surface facing the electrode assembly 22, where the first surface connects the surface of the first connecting portion 241 facing the electrode assembly 22 and the surface of the first connecting portion 241 facing away from the electrode assembly 22.

The third insulating layer 313 is disposed on a surface of the second connecting portion 242 facing away from the electrode assembly 22, the fourth insulating layer 314 is disposed on a second surface 244, and a third insulating portion 33 is disposed on a surface facing the electrode assembly 22, where the second surface 244 connects the surface of the second connecting portion 242 facing the electrode assembly 22 and the surface of the second connecting portion 242 facing away from the electrode assembly 22.

The fifth insulating layer 315 is disposed on a surface of the third connecting portion 243 facing away from the electrode assembly 22, the sixth insulating layer 316 is disposed on a third surface, and a fourth insulating portion 34 is disposed on a surface facing the electrode assembly 22, where the third surface connects the surface of the third connecting portion 243 facing the electrode assembly 22 and the surface of the third connecting portion 243 facing away from the electrode assembly 22.

The above descriptions are only specific implementations of this application, but the scope of protection of this application is not limited thereto. Any changes or substitutions that can be easily conceived by those skilled in the art within the technical scope disclosed by this application should be covered within the scope of protection of this application. Therefore, the scope of protection of this application shall be subject to the scope of protection of the claims.

## Claims

1. A battery cell **characterized by** comprising:
a housing;
an electrode assembly, wherein the electrode assembly is accommodated in the housing;
an electrode terminal, wherein the electrode terminal is disposed on the housing; and
a connecting member, wherein the connecting member is configured to connect the electrode terminal and the electrode assembly, and a first insulating portion is disposed on at least a portion of a surface of the connecting member facing the housing.

2. The battery cell according to claim 1, **characterized in that**:
the connecting member comprises a first connecting portion, the first connecting portion is connected to the electrode assembly, the first insulating portion comprises a first insulating layer, and the first insulating layer is disposed on a surface of the first connecting portion facing away from the electrode assembly.

3. The battery cell according to claim 2, **characterized in that**:
a second insulating portion is disposed on at least a portion of a surface of the first connecting portion facing the electrode assembly.

4. The battery cell according to claim 3, **characterized in that**:
the second insulating portion is disposed at an edge of the surface of the first connecting portion facing the electrode assembly, and a portion of the surface of the first connecting portion facing the electrode assembly is connected to a tab of the electrode assembly, wherein the portion of the surface is not provided with the second insulating portion.

5. The battery cell according to claim 3 or 4, **characterized in that**:
the first connecting portion has a first surface, wherein the first surface connects the surface of the first connecting portion facing the electrode assembly and the surface of the first connecting portion facing away from the electrode assembly; and
the first insulating portion comprises a second insulating layer, wherein the second insulating layer is disposed on at least a portion of the first surface.

6. The battery cell according to claim 5, **characterized in that**:
the second insulating layer is connected to at least one of the first insulating layer and the second insulating portion.

7. The battery cell according to claim 5 or 6, **characterized in that**:
a surface of the housing facing the tab of the electrode assembly has a protrusion, and the second insulating layer is disposed between a sidewall of the protrusion and the first connecting portion.

8. The battery cell according to any one of claims 2 to 7, **characterized in that**:
the connecting member comprises a second connecting portion, the second connecting portion is bent relative to the first connecting portion, and the second connecting portion is connected to the electrode terminal.

9. The battery cell according to claim 8, **characterized in that**:
the first insulating portion comprises a third insulating layer, and the third insulating layer is disposed on at least a portion of a surface of the second connecting portion facing away from the electrode assembly.

10. The battery cell according to claim 9, **characterized in that**:
the housing comprises an end cap and a housing body, wherein the end cap covers an opening of the housing body; and
the battery cell comprises:
an insulating member, wherein at least a portion of the insulating member is disposed between the housing body and the connecting member, and at least a portion of the third insulating layer is disposed between the second connecting portion and the insulating member.

11. The battery cell according to claim 10, **characterized in that**:
the insulating member comprises a first groove, and at least a portion of the third insulating layer is accommodated in the first groove.

12. The battery cell according to any one of claims 8 to 11, **characterized in that**:
the second connecting portion has a second surface, wherein the second surface connects a surface of the second connecting portion facing the electrode assembly and the surface of the second connecting portion facing away from the electrode assembly; and
the first insulating portion comprises a fourth insulating layer, wherein the fourth insulating layer covers at least a portion of the second surface.

13. The battery cell according to any one of claims 8 to 12, **characterized in that**:
a third insulating portion is disposed on at least a portion of the surface of the second connecting portion facing the electrode assembly.

14. The battery cell according to claim 13, **characterized in that**:
the fourth insulating layer is connected to at least one of the third insulating layer and the third insulating portion.

15. The battery cell according to any one of claims 1 to 14, **characterized in that**:
the connecting member comprises the first connecting portion, the second connecting portion, and a third connecting portion, wherein the first connecting portion is connected to the electrode assembly, the second connecting portion is connected to the electrode terminal, and the third connecting portion is bent and connects the first connecting portion and the second connecting portion.

16. The battery cell according to claim 15, **characterized in that**:
the first insulating portion comprises a fifth insulating layer, and the fifth insulating layer is disposed on at least a portion of a surface of the third connecting portion facing away from the electrode assembly.

17. The battery cell according to claim 15 or 16, **characterized in that**:
the third connecting portion has a third surface, wherein the third surface connects a surface of the third connecting portion facing the electrode assembly and the surface of the third connecting portion facing away from the electrode assembly; and
the first insulating portion comprises a sixth insulating layer, wherein the sixth insulating layer is disposed on at least a portion of the third surface.

18. The battery cell according to any one of claims 15 to 17, **characterized in that**:
a fourth insulating portion is disposed on at least a portion of the surface of the third connecting portion facing the electrode assembly.

19. The battery cell according to claim 18, **characterized in that**:
the sixth insulating layer is connected to at least one of the fifth insulating layer and the fourth insulating portion.

20. The battery cell according to any one of claims 15 to 19, **characterized in that**:
the second insulating portion is disposed on at least a portion of a surface of the first connecting portion facing the electrode assembly, a third insulating portion is disposed on at least a portion of a surface of the second connecting portion facing the electrode assembly, and a fourth insulating portion is disposed on at least a portion of a surface of the third connecting portion facing the electrode assembly, wherein the first insulating portion, the second insulating portion, the third insulating portion, and the fourth insulating portion are integrally formed.

21. The battery cell according to any one of claims 1 to 20, **characterized in that**:
the housing comprises an end cap and a housing body, the end cap covers the opening of the housing body, and the electrode terminal is disposed on the housing body.

22. The battery cell according to claim 21, **characterized in that**:
the housing body comprises a first wall and a second wall that are adjacent to each other, the electrode terminal is disposed on the first wall, and a side of the electrode assembly facing the second wall is provided with the tab.

23. The battery cell according to claim 22, **characterized in that**:
the end cap is connected to the first wall and the second wall, a projected area of the end cap in a direction perpendicular to a thickness direction of the end cap is larger than a projected area of the first wall in a direction perpendicular to a thickness direction of the first wall, and the projected area of the end cap in the direction perpendicular to the thickness direction of the end cap is larger than a projected area of the second wall in a direction perpendicular to a thickness direction of the second wall.

24. The battery cell according to any one of claims 1 to 23, **characterized in that**:
a melting point of the first insulating portion is greater than or equal to 100°C.

25. A battery **characterized by** comprising:
the battery cell according to any one of claims 1 to 24.

26. An electric apparatus **characterized by** comprising:
the battery cell according to any one of claims 1 to 24 or the battery according to claim 25, wherein the battery cell or the battery is configured to supply electric energy to the electric apparatus.

27. An energy storage apparatus **characterized by** comprising:
the battery cell according to any one of claims 1 to 24 or the battery according to claim 25.

28. A method for preparing a battery cell, **characterized by** comprising:
disposing a first insulating portion on a surface of a connecting member;
connecting one end of the connecting member to an electrode terminal disposed on a housing while placing the first insulating portion between the housing and the connecting member; and
connecting another end of the connecting member to an electrode assembly.

29. The method according to claim 28, **characterized in that**:
the connecting member comprises a first connecting portion, a second connecting portion, and a third connecting portion, wherein the first connecting portion is connected to the electrode assembly, the second connecting portion is connected to the electrode terminal, and the third connecting portion connects the first connecting portion and the second connecting portion.

30. The method according to claim 29, **characterized in that** the method comprises:
integrally forming the first insulating portion, a second insulating portion, a third insulating portion, and a fourth insulating portion on the surface of the connecting member, while placing the second insulating portion between the electrode assembly and the first connecting portion, the third insulating portion between the electrode assembly and the second connecting portion, and the fourth insulating portion between the electrode assembly and the third connecting portion.

31. The method according to any one of claims 28 to 30, **characterized in that** the housing comprises an end cap and a housing body, wherein
the method comprises:
using the end cap to cover an opening of the housing body, when one end of the connecting member is connected to the electrode terminal disposed on the housing with the first insulating portion placed between the housing and the connecting member, and another end of the connecting member is connected to the electrode assembly.

32. The method according to claim 31, **characterized in that** the housing body comprises a sidewall and a bottom wall, wherein the bottom wall is opposite the opening; and
the connecting one end of the connecting member to an electrode terminal disposed on a housing while placing the first insulating portion between the housing and the connecting member comprises:
connecting one end of the connecting member to the electrode terminal disposed on the housing while placing the first insulating portion between the sidewall and the connecting member.
